# EUROPÄISCHE PATENTSCHRIFT

(11) **EP 1 561 770 B1**
(45) Veröffentlichungstag und Bekanntmachung des Hinweises auf die Patenterteilung: **04.04.2007**
(21) Anmeldenummer: 05002690.5
(22) Anmeldetag: 09.02.2005
(51) Int. Cl.: C08G 77/388, C08G 77/54

(54) **Verzweigte Polyorganosiloxane mit quarternären Ammoniumgruppen**
Branched Polyorganosiloxane with quaternary Ammoniumgroups
Polyorganosiloxanes ramifiés à fonctions ammonium quarternaire

(30) Priorität: 09.02.2004 DE 102004006300
(43) Veröffentlichungstag der Anmeldung: 10.08.2005
(73) Patentinhaber: Schill + Seilacher "Struktol" Aktiengesellschaft, 22113 Hamburg (DE)
(72) Erfinder: Thümmler, Gisela, 01239 Dresden (DE); Twardawa, Elke, 01159 Dresden (DE); Hirsch, Eckhard, 28832 Achim (DE); Spitzner, Hartmut, Dr., 01612 Roda (DE)
(74) Vertreter: UEXKÜLL & STOLBERG

(56) Entgegenhaltungen:
- EP-A- 1 303 557
- DE-A1- 10 036 533

## Beschreibung

Die Erfindung betrifft neue verzweigte Polyorganosiloxane mit quaternären Ammoniumgruppen, Verfahren zu deren Herstellung und die Verwendung dieser Polyorganosiloxane als Textilweichmacher, zur Behandlung von Fasern, Celluloseprodukten und in kosmetischen Zubereitungen und insbesondere als waschfeste hydrophile Textilweichmacher.

Quaternäre Ammoniumgruppen tragende Polysiloxane sind aus der Literatur an sich bekannt. Die DE-A-37 05 121 legt polyquatemäre Polysiloxanpolymere mit sich wiederholenden Einheiten AB offen, so daß blockartige Polymere (AB)ₙA resultieren, die durch Umsetzung von α,ω-Epoxysiloxanen mit ditertiären Diaminen in Gegenwart von Säuren bei Temperaturen von 40-120°C erhalten werden. Weiterhin wird die Verwendung der beschriebenen polyquaternären Polysiloxanpolymere in kosmetischen Zubereitungen, insbesondere in Zubereitungen zur Pflege der Haare beschrieben. Die WO-A-01/41719 und WO-A-01/41720 beschreiben die Verwendung dieser polyquaternären Polysiloxanpolymere in kosmetischen Zusammensetzungen in Kombination mit weiteren typischen Bestandteilen solcher Formulierungen und mit kationischen Polymeren. Durch die Verwendung dieser Siloxane wird eine verbesserte Kämmbarkeit, ein antistatischer Effekt, Glanz und eine verbesserte Auswaschbeständigkeit der Produkte aus Haaren erreicht. Die WO-A-02/10259 lehrt jedoch, daß die beschriebene Waschbeständigkeit sich auf den kurzzeitigen Angriff von vornehmlich Wasser und sehr milden, die Haut nicht irritierenden Tensiden bezieht, während waschfeste, hydrophile Textilweichmacher in Waschvorgängen dem Angriff konzentrierter Tensidlösungen mit hohem Fett- und Schmutzlösevermögen in Kombination mit stark alkalischen Komplexbildnern, oxidativ wirkenden Bleichmitteln und komplexen Enzymsystemen bei zum Teil erhöhten Temperaturen widerstehen müssen. Für diesen Einsatz sind die in der DE-A 37 05 121 beschriebenen polyquaternären Polysiloxanpolymere nicht geeignet. Für sehr hohe Werte von n ist das erreichte Molgewicht sehr stark von der Dosiergenauigkeit der Ausgangsstoffe und den Reaktionsbedingungen bei der Herstellung abhängig und somit können die Eigenschaften der polyquaternären Polysiloxanpolymere starken Schwankungen unterliegen. Ein weiterer Nachteil der in der DE-A-37 05 121 offengelegten Erfindung ist, daß ausschließlich die Herstellung von linearen, nicht aber von verzweigten oder zumindest teilweise vernetzten Siloxanpolymeren möglich ist.

Die US-A-4 533 714 und US-A-4 587 321 lehren die Verwendung von ähnlich aufgebauten polyquaternären Polysiloxanpolymeren in kosmetischen Produkten. Die Produkte können durch Umsetzung von α,ω-Halogenalkylsiloxanen mit ditertiären Diaminen oder durch Reaktion von α,ω-Dimethylaminoalkylsiloxanen mit Alkyldihalogeniden gewonnen werden. Letztere Synthese hat den Nachteil, daß zur Erzeugung des von α,ω-Dimethylaminoalkylsiloxans eine Hydrosilylierung eines α,ω-H-Siloxans mit einem Allylamin beschrieben ist, die zwar aus B. Marciniec, Comprehensive Handbook on Hydrosilylation, Pergamon Press, Oxford 1992 bekannt, aber schwierig durchzuführen ist. Neben den Nachteilen der in der DE-A-37 05 121 offengelegten Lehre, die auch für die US-A-4 533 714 in vollem Umfang zutreffen, besteht ein weiterer wesentlicher Nachteil der polyquaternären Polysiloxanpolymere aus der US-A-4 533 714 in der Verwendung von halogenierten Ausgangsstoffen für die Herstellung. Diesen Nachteil haben auch die in der WO-A-99/32539 offenbarten multikationischen Siliconpolymere zur Anwendung in der Behandlung von Geweben und in kosmetischen Formulierungen für die Haarpflege. Die Synthese der Siliconpolymere ist sehr aufwendig und beinhaltet einen Quatemisierungsschritt unter Verwendung von Alkylhalogeniden, Alkylsulfaten u.s.w., um eine pH-unabhängige Quaternierung zu erzielen. Einen solchen Reaktionsschritt beinhalten auch die in der DE-A-100 36 532 bzw. DE-A-100 36 522 offengelegten Herstellungswege von quaternierten α,ω-aminosäurefunktionalisierten Polysiloxanen und linearen aminosäuremodifizierten polyquaternären Polysiloxanen. DE-A-196 52 524 lehrt, daß eine vollständige Reaktion mit den teilweise giftigen, mutagen und/oder krebserregend wirkenden halogenierten Verbindungen nicht immer sichergestellt ist, so daß teilweise die Gefahr einer Verunreinigung der so hergestellten quaternären Polysiloxanpolymere mit toxikologisch nicht akzeptablen Alkylhalogeniden besteht. Diesen Nachteil weist ebenso der in US-A-3 389 160 beschriebene Weg zu quaternierten Polysiloxanen auf. Hier geht man von epoxyfunktionellen Siloxanen aus, die in einem ersten Schritt mit sekundären Aminen zu Aminosiloxanen umgesetzt werden. In einem zweiten Schritt werden dann die Aminosiloxane mit Alkylhalogeniden quaterniert.

Die JP-A-10291967 legt ebenfalls einen Syntheseweg zu quaternären Siloxanen offen, der auf einer Hydrosilylierung von Diallylammoniumsalzen beruht. Die erhaltenen Verbindungen finden Verwendung aufgrund ihrer antimikrobiellen Eigenschaften. Der gewählte Syntheseweg ist sehr aufwendig.

Die DE-A-37 19 086 beschreibt diquaternäre Polysiloxane und deren Herstellung durch Umsetzung von α,ω-Epoxysiloxanen mit tertiären Aminen in Gegenwart von Säuren und deren Verwendung in kosmetischen Zubereitungen, insbesondere zur Pflege der Haare. Die DE-A-100 36 533 legt ein verbessertes Verfahren zur Herstellung der polyquaternären Polysiloxane aus der DE-A-37 05 121 und auch der diquaternären Polysiloxane aus der DE-A-37 19 086 offen, bietet jedoch hinsichtlich der Polymerstrukturen keine neuen Lösungen.

In der DE-A-38 37 811 wird die Anwendung der diquaternären Siloxane aus der DE-A-37 19 086 und auch seitenständig durch quaternäre Ammoniumgruppen substituierter Siloxane als Korrosionsinhibitoren in Kühlschmierstoffen und anderen Zubereitungen, die vornehmlich aus Wasser bestehen, beschrieben. Die DE-A-38 02 622 lehrt Mittel zum Ausrüsten von Textilfasern oder aus Textilfasern bestehender Produkte, welche 0,5 bis 80 Gew.-% eines Gemisches modifizierter Organopolysiloxane A und B im Gewichtsverhältnis A : B von 10 : 1 bis 1 : 1 enthalten, wobei das Organopolysiloxan A ein Polyethergruppen enthaltendes lineares Siloxan mit mindestens 40 Dialkylsiloxyeinheiten ist, an welches mindestens 2 Polyethergruppen eines Molgewichts von jeweils 600 bis 4000, die aus 40 bis 100 Mol-% Oxyethyleneinheiten bestehen, gebunden sind, und das Organopolysiloxan B ein diquaternäres Polysiloxan wie es in der DE-A-37 19 086 beschrieben ist, aber auch ein kammförmiges durch quaternäre Ammoniumgruppen substituiertes Siloxan sein kann. Die Anwendung dieser Mittel besteht in der Ausrüstung von Textilien und Textilfasern mit Weichmachern, die eine verbesserte Hydrophilie im Vergleich zu herkömmlichen Aminosiloxanweichmachern aufweisen. Ausschließlich kammförmig durch quaternäre Ammoniumgruppen substituierte Siloxane, wie sie zum Beispiel auch die DE-A-14 93 384 beschreibt, haben den Nachteil, daß die Dimethylsiloxyketten stets durch Methylsiloxygruppen unterbrochen werden, welche seitenständig quaternäre Stickstoffatome aufweisen und dadurch der typische Siliconweichgriff verloren geht. Die in der DE-A-37 19 086 beschriebenen diquaternären Polysiloxane weisen diesen Nachteil nicht auf. Es zeigte sich aber, daß derartig ausgerüstete Textilien ihren Weichgriff schon nach nur wenigen Wäschen mit üblichen Waschmitteln verlieren und somit die Permanenz der diquaternären Polysiloxane auf der Faser zu gering ist. Die DE-A-37 05 121 lehrt unter anderem, daß bei hohen Molekulargewichten in diquaternären Polysiloxanen zunehmend die Eigenschaften der Dimethylsiloxyeinheiten überwiegen, während der Einfluß der quaternären Ammoniumgruppen abnimmt. Im Hinblick auf die gewünschten anwendungstechnischen Eigenschaften ist man deshalb gezwungen, einen relativ engen Molgewichtsbereich einzuhalten, um keinen der geschilderten Nachteile überwiegen zu lassen.

Die WO-A-02/10256 beschreibt die Herstellung und Verwendung von mono- oder polyquaternierten Polysiloxanen und Aminosiloxanen durch Umsetzung von monofunktionellen Epoxy- oder Halogenalkylsiloxanen mit primären, sekundären und tertiären Aminen, wobei die monofunktionellen Siloxane durch saure Equilibrierung von trimethylsilylterminierten Siloxanen mit dimethylsiloxyreichen Verbindungen, z.B. Octamethylcyclotetrasiloxan, in Gegenwart entsprechender Mengen SiH-haltiger Siloxane und nachfolgende Hydrosilylierung mit ungesättigten Epoxiden, z.B. Allylglycidylether, oder ungesättigten Halogencarbonsäureestern, z.B. Chloressigsäureallylester, hergestellt werden. Die Equilibrierungsprodukte enthalten dabei statistisch eine SiH-Gruppe. Im Equilibrierungsgleichgewicht werden zusätzlich Produkte gebildet, die pro Molekül über keine bzw. zwei oder mehr terminale SiH-Funktionen verfügen. Die teilweise entstehenden, nicht substituierten Siloxane sind nicht für einen Einsatz in textilen Anwendungen geeignet, da sie auf Textilien während der Ausrüstung zu Siliconflecken führen können. Die erzielten Griffeigenschaften sind nicht ausreichend.

Die WO-A-02/10257 und WO-A-02/10259 beschreiben Polysiloxanpolymere, die neben quaternären Stickstoffatomen auch Polyethersequenzen im Molekül aufweisen, und deren Verwendung als waschbeständige hydrophile Weichmacher. Aufgrund des hohen organischen Anteils sinkt die Substantivität an der Faser und die Waschfestigkeit nimmt gegenüber den in der DE-A-37 05 121 dargelegten polyquaternären Polysiloxanpolymeren ab. Die damit ausgerüsteten Textilien und Fasern weisen keinen ausreichenden Weichgriff auf.

Die EP-A-1 000 959 beschreibt polyetherquatfunktionelle Polysiloxane, die Herstellung dieser Verbindungen und deren Verwendung in Zubereitungen zur Verbesserung der Oberflächeneigenschaften von Geweben und Fasern. Die beschriebenen Verbindungen werden durch gleichzeitige Hydrosilylierung von wasserstoffhaltigen Siloxanen mit Allylpolyether und ungesättigten Epoxiden und nachfolgende Umsetzung der Epoxygruppen mit tertiären Aminen in Gegenwart einer physiologisch verträglichen Säure hergestellt. Die hergestellten Siloxane verleihen damit ausgerüsteten Fasern eine ausreichende Hydrophilie. Die EP-A-1 000 959 beschreibt sowohl seitenständig modifizierte Silicone, die, wie schon erläutert, nur über unzureichende Griffeigenschaften verfügen, als auch α,ω-modifizierte Siloxane, die aufgrund des Herstellungsprozesses ein Gemisch aus α,ω-diquaternären Siloxanen, Polyether-Quatsiloxanen und α,ω-Dipolyethersiloxanen darstellen. Die mit derartigen Stoffgemischen erzielte Substantivität auf textilen Geweben und die Waschfestigkeit der weichmachenden Ausrüstung sind zu gering.

Die US-A-4 472 566 offenbart quaternierte Polysiloxane, die aus aminomodifizierten Polysiloxanen durch Quaternierung mit Benzylchlorid gewonnen werden. In jedem Fall ist das quaternierte Stickstoffatom immer mit mindestens einem Wasserstoffatom substituiert, so daß die Quaternierung nicht dauerhaft und abhängig vom pH-Wert ist. Die WO-A-02/10255 beschreibt Ammoniumgruppen aufweisende Organosiliciumverbindungen, die durch Addition von Aminen oder Polyaminen an Epoxysilicone und nachfolgende Protonierung mit Säuren erhalten werden und deren Anwendung als Hydrophobiermittel für Textilien, Glas und als Bautenschutzmittel. Die Quatemierung ist somit nicht dauerhaft und abhängig vom pH-Wert. Obwohl die textile Ausrüstung mit Weichmachern in saurem Medium erfolgt, kommt es doch immer wieder vor, daß aus vorherigen Behandlungsschritten Lauge mit dem Textil in das Ausrüstungsbad verschleppt wird und es relativ schnell zu einem Anstieg des pH-Werts der Flotte kommt. Die Stabilität der Flotte wird dadurch verschlechtert. Die Emulsion der in der Lehre von der WO-A-02/10255 genannten Verbindungen kann brechen und es besteht die Gefahr der Bildung von Störungen, wie z.B. von sogenannten Siliconflecken auf dem Textil. Aufgrund ihrer hydrophobierenden Eigenschaften sind die erhaltenen Organosiliciumverbindungen nicht zum Einsatz als hydrophile Weichmacher geeignet.

Weitere diquaternäre Polydimethylsiloxane und deren Verwendung in Haarkosmetika, sowie diese enthaltende Haarwasch- und Haarbehandlungsmittel werden in der DE-A-29 12 485 vorgestellt. Die Verbindungen teilen die für die sehr strukturähnlichen Siloxane aus der DE-A-37 19 086 beschriebenen Nachteile. Mit ihnen ausgerüstete Textilien verlieren ihren Weichgriff schon nach nur wenigen Wäschen mit üblichen Waschmitteln. Die Permanenz der diquaternären Polysiloxane auf der Faser ist zu gering.

Die US-A-4 384 130 und US-A-4 511 727 beschreiben ebenfalls quaternäre Ammoniumgruppen tragende Silicone. Die Verbindungen werden durch Veresterung von mit Hydroxyalkylgruppen substituierten quaternären Aminen mit Dicarbonsäuren oder cyclischen Dicarbonsäureanhydriden und nachfolgende Umesterung mit hydroxyalkylgruppensubstituierten Polysiloxanen erhalten. Die Herstellung der beschriebenen Produkte ist sehr aufwendig, sie sind sehr hochviskos und können als Antistatikum verwendet werden. Für einen Einsatz als Weichmacher für Textilien sind sie nicht geeignet.

Die GB-A-1 006 729 beschreibt ein Verfahren zur Herstellung quaternierter Siloxane durch Reaktion von γ-Halogenalkylsilanen und ―siloxanen mit tertiären Aminen. Um akzeptable Reaktionsgeschwindigkeiten und vollständige Umsätze zu erreichen, müssen entweder lod- oder Bromalkylsilane oder -siloxane oder katalysierende Zusätze verwendet werden. Die Anwendung eines in der GB-A-1 006 729 beschriebenen quaternierten Siloxans wird in der GB-A-1 549 180 offengelegt. Quaternäre Ammonium- und tertiäre Aminogruppen enthaltende Organosiliciumverbindungen und deren Herstellung durch Umsetzung von Halogenalkylsiloxanen mit tertiären Diaminen werden in der DE-A-100 04 321 beschrieben. Nachteilig ist es, daß bei dem erfindungsgemäßen Verfahren die Aminkomponente gegenüber dem Halogenalkylsiloxan bevorzugt im Überschuß eingesetzt werden muß, um die in der GB-A-1 006 729 beschriebenen Nachteile bei der Herstellung zu überwinden. Die verwendeten tertiären Diamine sind oftmals als reizend, ätzend oder gesundheitsschädlich bei Berührung mit der Haut durch die Chemikaliengesetzgebung eingestuft, so daß Überschüsse derartiger Ausgangsstoffe in Produkten zur Ausrüstung von Textilien oder in kosmetischen Zubereitungen unvorteilhaft sind. Die EP-A-0 436 359 beschreibt durch 1,1,1,3,5,5,5-Heptamethyltrisiloxan-3-yl-gruppen substituierte quaternäre Ammoniumverbindungen, die über sehr starke tensidische Eigenschaften verfügen, aber aufgrund von zu geringen Beiträgen zum Griffverhalten nicht für den Einsatz als hydrophiler Weichmacher in der Textilausrüstung geeignet sind. Durch 1,1,1,3,5,5,5-Heptamethyltrisiloxan-3-yl-gruppen substituierte quaternäre Ammoniumverbindungen und Amine, die zusätzlich Hydroxyalkylgruppen besitzen und deren Anwendung in Kombination mit anionischen Tensiden zum Einsatz in Weichspülern bei der Textilwäsche werden in der US-A-5 026 489 beschrieben. Die Permanenz der verwendeten Verbindungen ist aufgrund ihrer stark tensidischen Eigenschaften zu gering, so daß sie sich nicht für den Einsatz in Produkten für die Erstausrüstung von Textilien eignen.

Die DE-A-196 52 524 beschreibt Emulsionen von quaternären Polydimethylsiloxanen, die aus den entsprechenden aminoalkylgruppensubstituierten Siliconen durch Quaternierung mit Toluensulfonsäuremethylester hergestellt wurden. Die erfindungsgemäßen Silicone sind seitenständig modifiziert und weisen immer noch einen zu geringen Weichgriff auf.

Weitere Textilweichmacher werden in der US-A-4 409 267 vorgestellt. Es handelt sich um Polysiloxane, die gleichzeitig Alkylgruppen, Polyethergruppen und wenigstens eine Aminogruppe, die durch Umsetzung einer an ein Si-Atom gebundenen Epoxygruppe mit einem primären oder sekundären Amin entstanden ist, tragen. Die Permanenz und Substantivität auf textilen Geweben ist zu gering und der erzielte Weichgriff nicht ausreichend. Aus diesem Grund wird diese Erfindung in der EP-A-1 116 813 weiterentwickelt. Es gelingt die Permanenz der Verbindungen zu verbessern, indem in der Formulierung statt primären oder sekundären Aminen aminoalkylsubstituierte Silane oder Silicone mit quaternären Ammoniumgruppen, wie sie die US-A-5 026 489 beschreibt, verwendet werden.

Lineare Polydialkylorganosiloxane mit Polyoxyalkylen- und aminofunktionellen Gruppen, die zusätzlich endständige Alkoxygruppen aufweisen, werden in der EP-A-1 174 469 offenbart. Die beschriebenen Siloxane finden als Haarpflegemittel, zur Behandlung von textilen Flächengebilden und in der Formulierung von tensidischen Zubereitungen Verwendung. Die Herstellung der Verbindungen erfolgt durch basische Equilibrierung von Polyethersiloxanen mit Dialkoxyaminosilanen und cyclischen Siloxanen. Die endständigen Alkoxygruppen verleihen dem Produkt sehr gute Permanenz auf Baumwollfasern. Die EP-A-0 546 231 beschreibt einen hydrophilen Textilweichmacher auf der Basis eines Polyorganosiloxans. Das erfindungsgemäße Polyorganosiloxan wird durch Umsetzung von Epoxysiloxanen mit sekundären Aminoalkoholen oder ethoxylierten Aminoalkoholen hergestellt. Der mit den in beiden Schriften offenbarten Polydiorganosiloxanen erreichbare Weichgriff ist zu gering. Die Produkte besitzen weiterhin den Nachteil, daß positive Ladungen am Stickstoffatom nur durch eine Protonierung erzeugt werden können. Wie schon dargestellt, kann die Stabilität einer an sich sauren Textilausrüstungsflotte durch eingeschleppte Alkalinität drastisch verschlechtert werden und eine Emulsion der in den Lehren genannten Verbindungen brechen.

Ein weiterer Textilweichmacher mit geringer Vergilbung und verbesserter Hydrophilie wird in der EP-A-1 081 271 vorgestellt. Der Weichmacher beruht auf reaktiven oder nichtreaktiven Aminosiliconölen, deren Aminogruppen an einem oder mehreren Stickstoffatomen mit 2,3-Epoxy-1-propanol oder anderen Epoxyalkanolen modifiziert wurden und mit weiteren Bestandteilen zum Weichmacher formuliert werden. Die erreichbare Waschfestigkeit ist, insbesondere bei Verwendung von reaktiven Aminoölen, ebenso wie die Vergilbungsstabilität und die Hydrophilie gut. Die mit der in der EP-A-1 081 271 vorgeschlagenen Problemlösung erreichbaren Griffeigenschaften können jedoch noch nicht befriedigen.

Es bestand somit die Aufgabe ein permanent quaterniertes Polyorganosiloxan zu entwickeln, das hervorragend auf textilen Substraten, z.B. Geweben und Fasern, haftet und gegenüber Wäschen mit Haushalts- oder industriellen Waschmitteln eine verbesserte Beständigkeit aufweist, und den damit ausgerüsteten Textilien und Fasern einen angenehmen und weichen Griff verleiht und die Wasseraufnahme der damit ausgerüsteten Textilien und Fasern nicht vermindert oder verlangsamt. Eine weitere Aufgabe bestand darin, permanent quaternierte Polyorganosiloxane zur Verfügung zu stellen, die physiologisch verträglich sind und somit zum Einsatz in kosmetischen Formulierungen, in Reinigern und Waschmitteln insbesondere in Kombination mit anionischen Tensiden, und in Formulierungen zur Pflege harter Oberflächen geeignet sind. Eine weitere Aufgabe bestand darin, die Synthese dieser permanent quaternierten Polyorganosiloxane reproduzierbar und so zu gestalten, daß auf die Verwendung von toxikologisch bedenklichen Einsatzstoffen und Lösungsmitteln verzichtet werden kann.

Die Aufgabe konnte überraschend durch neue verzweigte mehrfachquaternäre Organopolysiloxane gelöst werden.

Gegenstand der vorliegenden Erfindung sind demnach mehrfachquaternäre verzweigte Organopolysiloxane enthaltend Struktureinheiten

[R¹R₂SiO_{1/2}]ₐ , [R¹RSiO_{2/2}]_{b} , [R¹SiO_{3/2}]_{c} , [RSiO_{3/2}]_{d} und/oder [SiO_{4/2}]ₑ (I)

wobei
R gleich oder verschieden ist und einen einwertigen, gegebenenfalls halogenierten Kohlenwasserstoffrest mit 1 bis 18 Kohlenstoffatomen je Rest bedeutet,
R¹ gleich oder verschieden ist und ein Rest R, ein Rest M-E oder ein Rest -(M-A-M-D)ₘ-M-E ist, wobei mindestens ein Rest R¹ in den Struktureinheiten [R¹RSiO_{2/2}]_{b} und/oder [R¹SiO_{3/2}]_{c} die Bedeutung -(M-A-M-D)ₘ-M-E hat,
M ein zweiwertiger, geradkettiger, verzweigter oder cyclischer Kohlenwasserstoffrest mit mindestens 4 Kohlenstoffatomen ist, der eine oder mehrere Hydroxylgruppen aufweist, über eine Si-C Bindung an ein Siliciumatom gebunden ist und in der Kohlenstoffatomkette ein oder mehrere Sauerstoffatome aufweisen kann,
E gleiche oder verschiedene einwertige Reste ausgewählt aus der Gruppe 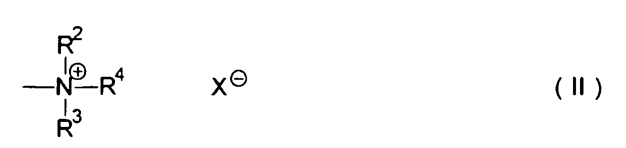 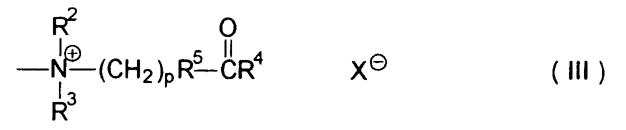 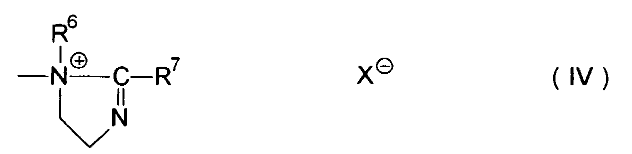 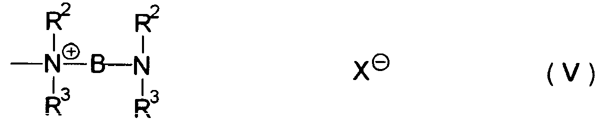 bedeutet,
A gleiche oder verschiedene zweiwertige Reste ausgewählt aus der Gruppe 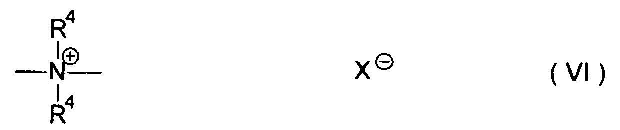 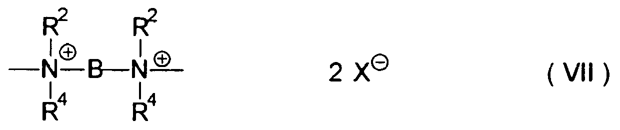 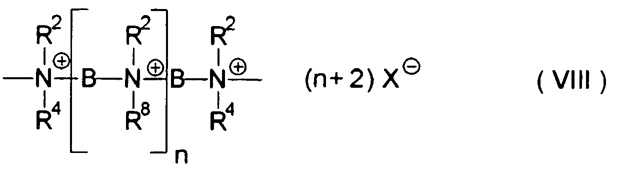 bedeutet,
D gleiche oder verschiedene zweiwertige Reste der Formel (IX) bedeutet,
wobei R wie zuvor definiert ist, 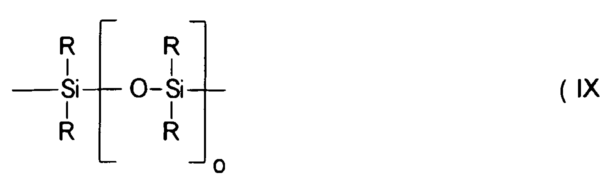 die Reste R² und R³ ein Wasserstoffatom oder gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können,
R⁴ ein einwertiger Alkylrest mit 1 bis 30 Kohlenstoffatomen oder ein Alkenylrest mit 2 bis 30 Kohlenstoffatomen ist, wobei sowohl die Alkyl- als auch die Alkenylreste Hydroxylgruppen aufweisen können, oder Bestandteil eines verbrückenden Alkylrestes ist,
R⁵ ein -O- oder -NR⁹-Rest ist, wobei R⁹ ein Alkyl- oder Hydroxyalkylrest mit 1 bis 4 Kohlenstoffatomen oder ein Wasserstoffatom ist,
R⁶ und R⁷ gleiche oder verschiedene einwertige Alkylreste mit 1 bis 30 Kohlenstoffatomen sind, wobei die Alkylreste Hydroxylgruppen aufweisen können,
R⁸ die Bedeutung des Restes R⁴ hat oder ein Rest M-D-M-E oder ein Rest M-D-(M-A-M-D)ₘ-M-E ist,
B ein zweiwertiger Kohlenwasserstoffrest mit mindestens 2 Kohlenstoffatomen ist, der eine oder mehrere Hydroxylgruppen und in der Kohlenstoffkette ein oder mehrere Sauerstoff- oder Stickstoffatome aufweisen kann,
X⁻ ein organisches oder anorganisches Anion ist,
a eine Zahl von 0 bis 100,
b eine Zahl von 10 bis 1000,
c eine Zahl von 0 bis 100,
d eine Zahl von 0 bis 100,
e eine Zahl von 0 bis 10 ist,
mit der Maßgabe, daß die Summe a + b + c + d + e größer oder gleich 10 ist,
m eine Zahl von 1 bis 1000,
n eine Zahl von 1 bis 10,
o eine Zahl von 1 bis 250, und
p eine Zahl von 2 bis 8 ist.

Weitere Ausführungsformen der Erfindung ergeben sich aus den abhängigen Ansprüchen.

Dadurch, daß mindestens ein Rest R¹ in den Struktureinheiten [R¹RSiO_{2/2}]_{b} und/oder [R¹SiO_{3/2}]_{c} die Bedeutung -(M-A-M-D)ₘ-M-E hat, liegen in dem Organopolysiloxan immer mindestens 2 quaternäre Ammoniumgruppen vor.

Vorzugsweise lassen sich die erfindungsgemäßen Organopolysiloxane vollständig durch die allgemeine Formel (la) beschreiben,

[R¹R₂SiO_{1/2}]ₐ [R¹RSiO_{2/2}]_{b} [R¹SiO_{3/2}]_{c} [RSiO_{3/2}]_{d} [SiO_{4/2}]ₑ (Ia)

wobei Reste und Indizes wie zuvor für Formel (I) definiert sind.

Wenn in der vorliegenden Anmeldung von "Organopolysiloxan" die Rede ist, sind damit auch solche Organosiloxane gemeint, die ein relativ niedriges Molekulargewicht aufweisen, z.B. solche, bei denen in der allgemeinen Formel a=2, b=10, c ,d und e=0 bzw. a, c, d, e=0 und b=40 bzw. a, d, e=0 und b=10, c=5.

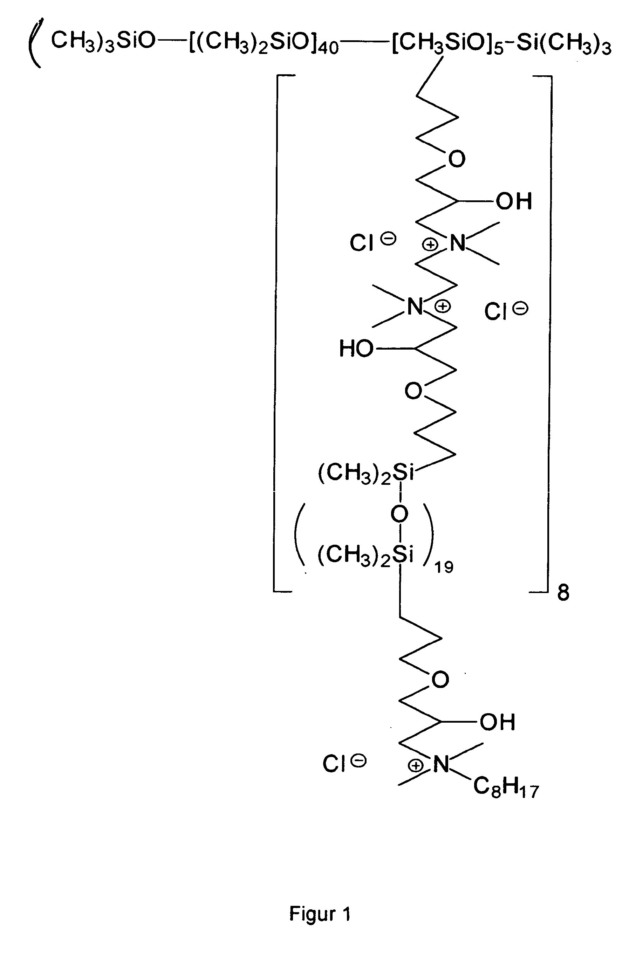

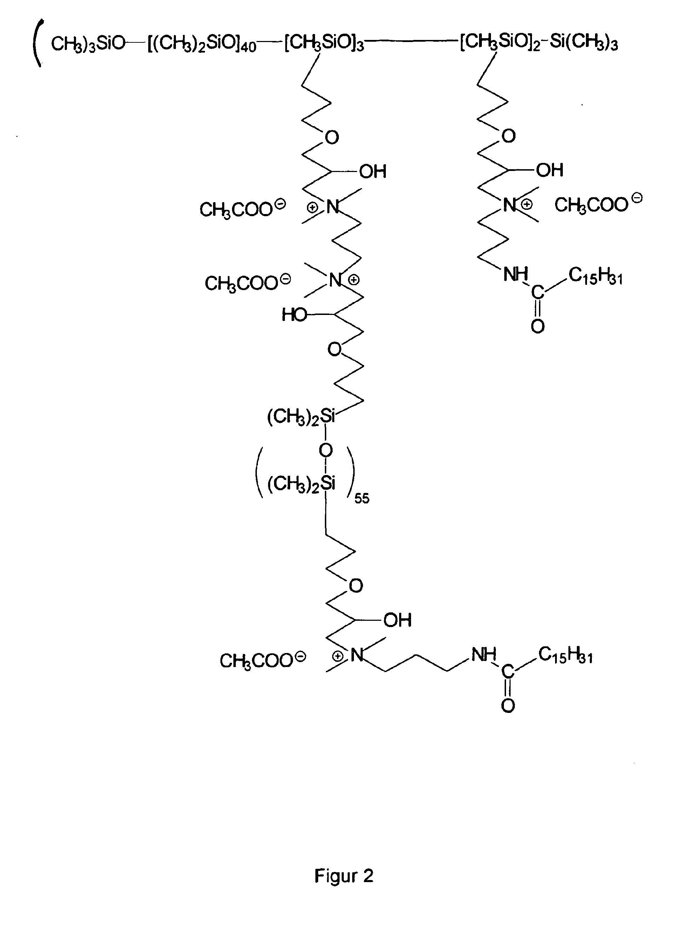

Beispiele für bevorzugte erfindungsgemäße mehrfachquaternäre verzweigte Organopolysiloxane sind in den Figuren 1 bis 4 gezeigt bzw. veranschaulicht.

Im folgenden werden die erfindungsgemäßen Organopolysiloxane, die Struktureinheiten gemäß der obigen allgemeinen Formel (I) enthalten, auch kurz als "Organopolysiloxane der allgemeinen Formel (I)" bezeichnet.

Die Schreibweise der Struktureinheiten [RₓSiO_{(4-x)/2}] (mit x = 0, 1, 2 oder 3) in Formel (I) ist dem Fachmann auf dem Gebiet der Silikonchemie bekannt, siehe Römpp Chemie Lexikon, 9. Auflage 1992, Seiten 4168-4169. Sie lässt die Funktionalität der Struktureinheiten erkennen, d.h. mit wieviel weiteren Siloxaneinheiten eine Struktureinheit jeweils verknüpft ist. Z.B. ist die Struktureinheit [R¹RSiO_{2/2}]_{b} difunktionell, d.h. mit zwei weiteren Siloxaneinheiten verknüpft.

Ferner sei darauf hingewiesen, dass quaternäre Ammoniumgruppen von Fachleuten auf dem Gebiet der Silikonchemie auch als quartäre Ammoniumgruppen bezeichnet werden.

Mit "verzweigte Organopolysiloxane" ist erfindungsgemäß gemeint, dass Organopolysiloxane der allgemeinen Formel (I) seitenständig, d.h. ausgehend von Struktureinheiten [R¹RSiO_{2/2}]_{b} oder [R¹SiO_{3/2}]_{c}, Reste aufweisen, die sowohl permanent quaternären Stickstoff als auch Organopolysiloxan-Einheiten des Typs -[R₂SiO_{2/2}]- enthalten. Insbesondere ermöglicht eine ausreichend große Anzahl von [R₂SiO_{2/2}]-Einheiten in den Seitenketten die Ausbildung von schlaufenartigen "Überstrukturen", die bei Aufbringung der Moleküle auf textile Substrate einen ausreichenden Weichgriff erzeugen. Durch die verzweigte Struktur weisen die erfindungsgemäßen Organopolysiloxane daher ein vorteilhaftes Eigenschaftsprofil auf, dass sie insbesondere zur Verwendung bei der Weichgriffausrüstung von Textilien geeignet macht.

Bevorzugter Gegenstand der Erfindung sind mehrfachquaternäre Organopolysiloxane, dadurch gekennzeichnet, daß
M ein zweiwertiger, geradkettiger oder verzweigter Kohlenwasserstoffrest mit mindestens 4 Kohlenstoffatomen ist, der eine Hydroxylgruppe aufweist, über eine Si-C Bindung an ein Siliciumatom gebunden ist und in der Kohlenstoffatomkette ein Sauerstoffatom aufweisen kann, wobei das mit der Hydroxylgruppe substituierte Kohlenstoffatom sich in Nachbarstellung zu einem Kohlenstoffatom befindet, das durch eine Einfachbindung an ein Stickstoffatom gebunden ist,
B ein zweiwertiger Kohlenwasserstoffrest der Formel -(CH₂)₂- oder -(CH₂)₃- ist,
der Rest R¹ in der Einheit [R¹R₂SiO_{1/2}]ₐ des mehrfachquaternären Organopolysiloxans der Formel (I) die Bedeutung des Restes R hat und
mindestens ein Rest R¹ in der Einheit [R¹RSiO_{2/2}]_{b} die Bedeutung -(M-A-M-D)ₘ-M-E hat,
a = 2,
b = 10 bis 200,
c, d und e = 0,
m = 1 bis 50,
n = 1 bis 5,
o = 6 bis 120, und
p = 2 bis 6 ist,
und die weiteren Substituenten die oben genannte Bedeutung haben. Insbesondere haben die Substituenten R², R³ und R⁴ dabei die Bedeutung gleiche oder verschiedene einwertige Alkylreste mit 1 bis 30, bevorzugt 1 bis 10, vorzugsweise 1 bis 5, z. B. 2 Kohlenstoffatomen, Alkenylreste mit 2 bis 30, bevorzugt 2 bis 10, insbesondere 2 bis 5 Kohlenstoffatomen, Arylreste mit 7 bis 15, bevorzugt 7 bis 10 Kohlenstoffatomen oder R², R³, R⁴ sind Bestandteil eines verbrückenden Alkylenrestes mit vorzugsweise 2 bis 10, insbesondere 2, 3 oder 4 Kohlenstoffatomen.

Weitere bevorzugte Bereiche für b sind 10 bis 1000, 20 bis 300 oder 50-100.

Die erfindungsgemäßen mehrfachquaternären Organopolysiloxane haben bevorzugt eine Viskosität von 10 - 5000000 mm²/s bei 25°C, vorzugsweise eine Viskosität von 50 - 100000 mm²/s bei 25°C und besonders bevorzugt eine Viskosität von 100 - 50000 mm²/s bei 25°C, z.B. etwa 1000-5000, 5000-10000 oder 20000-30000 mm²/s bei 25°C, gemessen nach DIN 51562/1. Die erfindungsgemäßen Organopolysiloxane sind also bei Normalbedingungen von Druck und Temperatur flüssig.

Die Reste R im erfindungsgemäßen mehrfachquaternären Organopolysiloxan der Formel (I) können gleiche oder verschiedene, gegebenenfalls halogenierte Kohlenwasserstoffreste sein. Beispiele für Reste R sind Alkylreste, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl- und der Octadecylrest, Cycloalkylreste, wie der Cyclopentyl-, Cyclohexyl-, Cycloheptyl-, Methylcyclohexyl- und Cyclooctylrest, Arylreste, wie der Phenyl-, o-, m-, p-Tolyl-, Xylyl- und der Naphthylrest, Alkylarylreste, wie der Benzyl- und der Phenylethylrest, Halogenalkylreste, wie der Chlormethyl-, Chlorethyl-, n-3,3,3-Trifluorpropyl-, 2,2,2,2',2',2'-Hexafluorisopropyl- und der 3,3,4,4,5,5,6,6,7,7,8,8,8-Tridecylfluor-n-octylrest, Halogenarylreste, wie der o, m und p-Chlorphenylrest.

Bevorzugt ist R ein Methyl-, Octyl-, Phenyl- und n-3,3,3-Trifluorpropylrest. Besonders bevorzugt ist R ein Methylrest.

Der Rest R¹ kann gleich oder verschieden sein und die Bedeutung des Restes R, die Bedeutung M-E und die Bedeutung -(M-A-M-D)ₘ-M-E haben, wobei mindestens ein Rest R¹ im erfindungsgemäßen mehrfachquaternären Organopolysiloxan in der Struktureinheit [R¹RSiO_{2/2}]_{b} und/oder [R¹SiO_{3/2}]_{c} der Formel (I) die Bedeutung -(M-A-M-D)ₘ-M-E hat.

M ist vorzugsweise ein zweiwertiger, geradkettiger oder verzweigter Kohlenwasserstoffrest mit mindestens 4 Kohlenstoffatomen, der eine Hydroxylgruppe aufweist, der über eine Si-C-Bindung an ein Siliciumatom gebunden ist und in der Kohlenstoffatomkette ein Sauerstoffatom aufweisen kann. In den erfindungsgemäßen mehrfachquaternären Organosiloxanen der Formel (I) können dabei gleiche oder verschiedene Reste M verwendet werden. Beispiele für geeignete Reste M sind 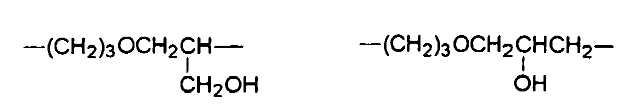 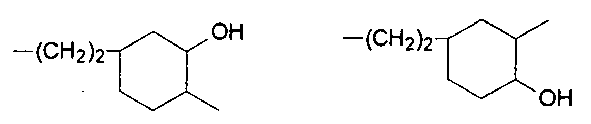 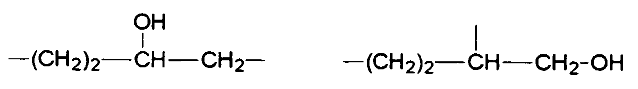 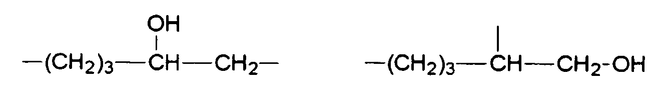 wobei die Hydroxylgruppe sich immer an einem Kohlenstoffatom in Nachbarstellung zu dem Kohlenstoffatom, das an die Reste E oder A gebunden ist, d.h. durch eine Einfachbindung an ein N-Atom gebunden ist, befindet. Die Hydroxyfunktion der Reste M stammt aus der Ringöffnungsreaktion eines Epoxids. Die weitere Valenz des zweiwertigen Restes M ist dabei immer durch eine Einfachbindung an ein Siliciumatom gebunden. Die Reste M können dabei weiterhin auch aromatische Gruppen enthalten. Bevorzugte Reste M sind 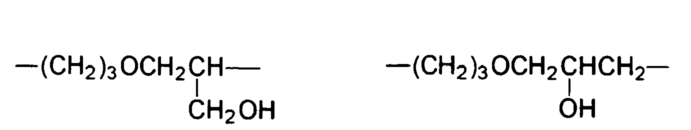 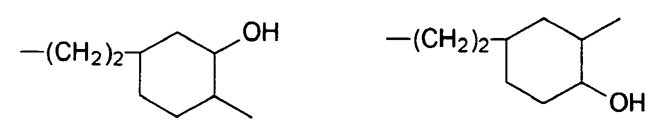 wobei die beiden nicht cyclischen Reste besonders bevorzugt sind.

Die Reste E im erfindungsgemäßen mehrfachquaternären Organopolysiloxan der Formel (I) sind gleiche oder verschiedene Reste ausgewählt aus den Gruppen (II), (III), (IV) und (V):

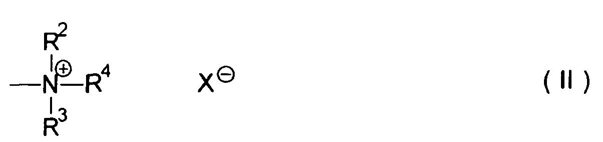

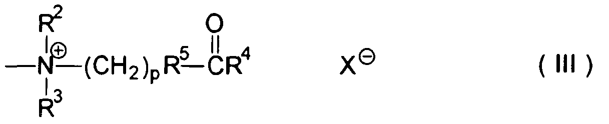

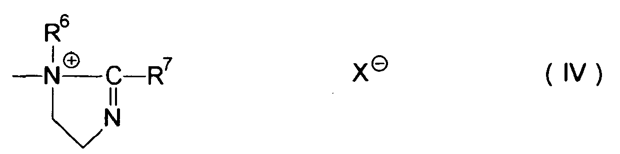

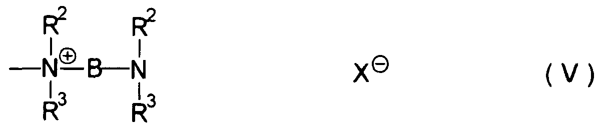

Die Reste E sind dadurch charakterisiert, daß sie genau ein quaternäres Stickstoffatom tragen. In den Resten E können noch weitere, nicht quaternierte Stickstoffatome vorhanden sein. Diese weiteren Stickstoffatome können wahlweise in neutraler und/oder in protonierter Form vorliegen. Die Protonierung kann dabei durch die dem Anion X⁻ entsprechende Säure HX, aber auch durch eine beliebige andere Säure erfolgt sein.

Die im Rest E enthaltenen Substituenten R² und R³ können gleich oder verschieden sein und wahlweise ein Wasserstoffatom, ein geradkettiger, verzweigter oder cyclischer Alkylrest mit 1 bis 30 Kohlenstoffatomen, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, ein geradkettiger, verzweigter oder cyclischer Alkenylrest mit 2 bis 30 Kohlenstoffatomen, wie der Vinyl-, Allyl-, aber auch Propagyl-, But-1-en-4-yl-, But-1-en-3-yl-, Pentenyl-, Hex-1-en-6-yl-, Hex-2-en-6-yl- und Oleylrest, ein Aryl-CH₂-Rest, wie der Benzyl-, o-, m-, p-Methylbenzylrest, aber gegebenenfalls auch ein Arylrest, wie der Phenylrest, o, m, p-Tolyl- und Xylylrest oder die Substituenten R² und R³ können Teile eines verbrückenden Alkylrests, wie Ethylen-, n-Propylen-, i-Propylen- oder n-Butylen-, i-Butylen-, Hexylen-, Octylenreste, oder Alkyl- oder Alkylenreste, die Hydroxylgruppen aufweisen, wie Hydroxyethyl- oder Hydroxypropylreste, sein. Die Substituenten R² und R³ können weiterhin Alkylreste, die von Sauerstoffatomen unterbrochen sind, wie -(C₂H₄O)ₛR', -(C₃H₆O)ₛR', -(C₂H₄O)ₛ(C₃H₆O)ₛR' und -(C₄H₈O)ₛR', wobei s eine ganze Zahl von 1 bis 50, vorzugsweise von 1 bis 15, ist und R' ein Wasserstoffatom oder ein Kohlenwasserstoffrest mit 1 bis 8 Kohlenstoffatomen, bevorzugt Wasserstoff, ein Methyl- oder Butylrest ist, und weiterhin Alkylreste, die von Schwefelatomen unterbrochen sind, wie -(C₂H₄S)ₛR' und -(C₃H₆S)ₛR', wobei s und R' die oben dafür angegebene Bedeutung haben, sein. Bevorzugt sind die Substituenten R² und R³ Alkylreste mit 1 bis 8 Kohlenstoffatomen, wie der Methyl-, Ethyl- und Propylrest, Alkenylreste mit 2 bis 8 Kohlenstoffatomen, wie der Allylrest, ein Benzylrest, Bestandteil eines verbrückenden Alkylenrests mit 2 bis 9 Kohlenstoffatomen, wie Ethylen-, Propylen- oder Isophorylenrest, oder ein Hydroxylgruppen aufweisender Alkylrest mit 2 bis 3 Kohlenstoffatomen, wie der Hydroxyethyl- oder Hydroxypropylrest. Besonders bevorzugt sind die Substituenten R² und R³ Methylreste.

Der im Rest E enthaltene Substituent R⁴ kann gleich oder verschieden sein und wahlweise ein geradkettiger, verzweigter oder cyclischer Alkylrest mit 1 bis 30 Kohlenstoffatomen, wie der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, ein geradkettiger, verzweigter oder cyclischer Alkenylrest mit 2 bis 30 Kohlenstoffatomen, wie der Vinyl-, Allyl-, But-1-en-4-yl-, But-1-en-3-yl-, Pentenyl-, Hex-1-en-6-yl-, Hex-2-en-6-yl- und Oleylrest, wobei sowohl Alkyl- als auch Alkenylrest durch Hydroxylgruppen substituiert sein können, wie z.B. Hydroxyethyl- oder Hydroxypropylrest. Bevorzugt ist R⁴ einer der vorstehend genannten Alkylreste, insbesondere ein Alkylrest mit größer/gleich 8 C-Atomen. Femer kann R⁴ Teil eines verbrückenden Alkylrests, wie Ethylen-, n-Propylen-, i-Propylen- oder n-Butylen-, i-Butylen-, Hexylen-, Octylenreste, oder Alkyl- oder Alkylenreste, die Hydroxylgruppen aufweisen, wie Hydroxylethyl- oder Hydroxypropylreste, sein. Vorzugsweise ist R⁴ dann Ethylen.

Der im Rest E der Formel (III) enthaltene Substituent R⁵ kann gleich oder verschieden sein und wahlweise ein Sauerstoffatom, -O-, oder ein Rest der Formel -NR⁹- sein, wobei R⁹ ein Alkyl- oder Hydroxyalkylrest mit 1 bis 4 Kohlenstoffatomen, wie z.B. ein Methyl-, Ethyl-, n-Propyl-, i-Propyl-, n-Butyl-, i-Butyl-, Hydroxyethyl- oder Hydroxypropylrest, oder ein Wasserstoffatom sein. Bevorzugt ist R⁵ -NR⁹- und R⁹ ein Wasserstoffatom.

Die im Rest E enthaltenen Substituenten R⁶ und R⁷ können gleich oder verschieden sein und sind Alkylreste mit 1 bis 30 Kohlenstoffatomen, wie z.B. der Methyl-, Ethyl-, n-Propyl-, i-Propyl-, n-Butyl-, tert-Butyl-, i-Pentyl-, neo-Pentyl-, n-Hexyl-, n-Heptyl-, n-Octyl-, 2-Ethylhexyl-, i-Octyl-, 2,2,4-Trimethylpentyl-, n-Nonyl-, n-Decyl-, n-Dodecyl-, Octadecyl-, C₂₄H₄₉-, Cyclopentyl-, Cyclohexyl-, Cycloheptyl-, Methylcyclohexyl- und Cyclooctylrest, wobei die Alkylreste R⁶ und R⁷ Hydroxylgruppen aufweisen können, wie z.B. der Hydroxyethyl- und der Hydroxypropylrest. Bevorzugt sind R⁶ und R⁷ Alkylreste mit größer/gleich 8 C-Atomen.

Der im Rest E der Formel (V) enthaltene Rest B ist ein zweiwertiger Kohlenwasserstoffrest mit mindestens 2 Kohlenstoffatomen, der vorzugsweise eine Hydroxylgruppe und in der Kohlenstoffkette Sauerstoffatome oder Stickstoffatome aufweisen kann. Beispiele für Reste B sind -CH₂CH₂-, -CH₂CH₂CH₂-, -CH₂CH(CH₃)-, -CH₂CH₂CH₂CH₂-,-CH₂CH(CH₂CH₃)-, - CH₂CH₂OCH₂CH₂-, -CH₂CH₂NHCH₂CH₂-, -CH₂CH₂CH₂OCH₂CH₂CH₂-, - CH₂CH₂CH₂NR²CH₂CH₂CH₂-, -CH₂CH₂OCH₂CH₂OCH₂CH₂-, - CH₂CH₂NR²CH₂CH₂NR²CH₂CH₂-, -CH₂CH(OH)CH₂-, - CH₂CH₂CH₂(OCH₂CH₂)ₛ(OCH₂CH(CH₃))ₛCH₂CH₂CH₂- mit wahlweise blockartiger und statistischer Verteilung der OCH₂CH₂- und OCH₂CH(CH₃)-Gruppen, wobei s und R² die oben dafür angegebene Bedeutung haben, der Cyclohexylen- und der Isophorylenrest. Bevorzugt ist der Rest B -CH₂CH₂- oder -CH₂CH₂CH₂-.

X⁻ ist ein organisches oder anorganisches Anion, bevorzugt ein physiologisch verträgliches organisches oder anorganisches Anion. Die organischen und anorganischen Anionen können dabei sowohl ein- als auch mehrwertig sein. Beispiele für geeignete Anionen X⁻ sind Chlorid-, Sulfat-, Phosphat-, Formiat-, Acetat-, Propionat-, Octoat-, Stearat-, Maleat-, Phthalat-, Benzoat- und Adipinationen, aber auch Alkyl- und Arylsulfonate, wie z.B. Methylsulfonat, Butylsulfonat und p-Toluensulfonat.

Die Reste A im erfindungsgemäßen mehrfachquaternären Organopolysiloxan der Formel (I) sind gleiche oder verschiedene Reste ausgewählt aus den Gruppen (VI), (VII), und (VIII)

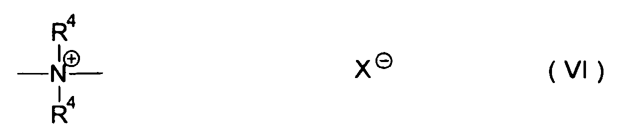

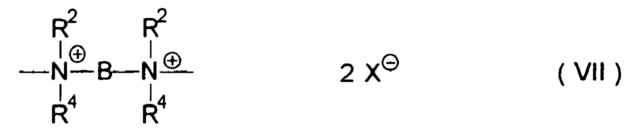

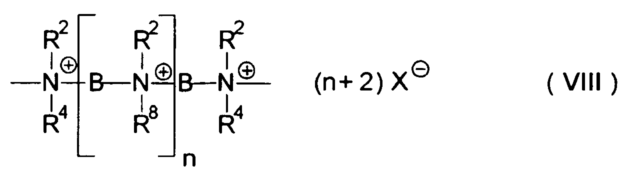

Die Reste A sind dadurch charakterisiert, daß sie mindestens ein quaternäres Stickstoffatom tragen und mit mindestens zwei Resten M substituiert sind. In den Resten A können noch weitere, nicht quaternierte Stickstoffatome vorhanden sein. Diese weiteren Stickstoffatome können wahlweise in neutraler und/oder in protonierter Form vorliegen. Die Protonierung kann dabei durch die dem Anion X⁻ entsprechende Säure HX, aber auch durch eine beliebige andere Säure erfolgt sein.

Die Substituenten R², R⁴ und B haben die oben gegebene Bedeutung.

Die Zahl n ist eine ganze Zahl und kann Werte von 1 bis 10 aufweisen.

Der im Rest A der Formel (VIII) enthaltene Rest R⁸ kann gleich oder verschieden sein und die Bedeutung des Restes R⁴, des Restes -M-D-M-E oder des Restes -M-D-(M-A-M-D)ₘ-M-E haben, wobei die Reste M und E die oben angegebenen Bedeutungen aufweisen.

Der Substituent D ist ein gleicher oder verschiedener, zweiwertiger, linearer Diorganosiloxanrest der Formel (IX) 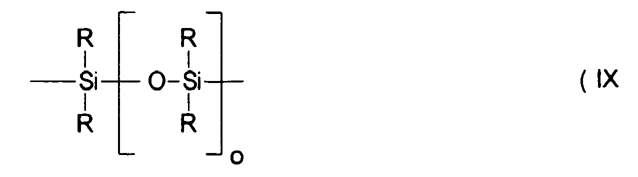 wobei R die oben angegebenen Bedeutungen annimmt und o eine ganze Zahl von 1 bis 250 ist. Bevorzugt ist R ein Methylrest und o eine ganze Zahl von 6 bis 120 und, besonders bevorzugt von 10 bis 100.

Der Koeffizient a in den mehrfachquaternären Organopolysiloxanen mit den Struktureinheiten

[R¹R₂SiO_{1/2}]ₐ, [R¹RSiO_{2/2}]_{b}, [R¹SiO_{3/2}]_{c}, [RSiO_{3/2}]_{d} und/oder [SiO_{4/2}]ₑ (I)

ist eine Zahl von 0 bis 100. Bevorzugt hat der Rest R¹ in der Einheit [R¹R₂SiO_{1/2}]ₐ die Bedeutung des Restes R und a ist eine Zahl von 2 bis 100, vorzugsweise 2 bis 50, insbesondere 2 bis 10.

Der Koeffizient b ist eine Zahl von 10 bis 1000, c eine Zahl von 0 bis 100, vorzugsweise 1 bis 50, insbesondere 2 bis 10, d eine Zahl von 0 bis 100, vorzugsweise 1 bis 50, insbesondere 2 bis 10 und e eine Zahl von 0 bis 10,, vorzugsweise 1 bis 5, insbesondere 2 bis 4, mit der Maßgabe, dass die Summe a + b + c + d + e größer oder gleich 10 ist.

Besonders bevorzugt hat der Rest R¹ in der Einheit [R¹R₂SiO_{1/2}]ₐ die Bedeutung des Restes R und a ist 2, b ist eine Zahl von 10 bis 200, c, d und e sind 0 und mindestens ein Rest R¹ in der Einheit [R¹RSiO_{2/2}]_{b} des mehrfachquaternären Organopolysiloxans der allgemeinen Formel (I) hat die Bedeutung -(M-A-M-D)ₘ-M-E. Weiter bevorzugt sind mehrfachquaternäre Organopolysiloxane der allgemeinen Formel (I) in denen der Rest R¹ in der Einheit [R¹R₂SiO_{1/2}]ₐ die Bedeutung des Restes R hat und a = 2, b eine Zahl von 10 bis 200, c, d und e = 0 sind und mindestens zwei Reste R¹ in der Einheit [R¹RSiO_{2/2}]_{b} die Bedeutung -(M-A-M-D)ₘ-M-E haben.

Der Koeffizient m ist eine Zahl von 1 bis 1000 und kann in den mehrfachquaternären Organopolysiloxanen der allgemeinen Formel (I) gleiche oder verschiedene Werte annehmen. Bevorzugt ist m eine Zahl von 1 bis 50 und besonders bevorzugt von 1 bis 20.
Der Koeffizient p ist eine Zahl von 2 bis 8, bevorzugt von 2 bis 6.

Gemäß einer bevorzugten Ausführungsform der folgenden Erfindung hat der Rest R¹ in der Struktureinheit [R¹R₂SiO_{1/2}]ₐ die Bedeutung R, d. h., die Struktureinheit hat die Formel [R₃SiO_{1/2}]ₐ.

Gemäß einer weiteren bevorzugten Ausführungsform hat der Rest [R¹R₂SiO_{1/2}]ₐ die Bedeutung [R₃SiO_{1/2}]ₐ und die Indices c, d und e in Formel (I) sind gleich 0.

Gemäß einer weiteren bevorzugten Ausführungsform der vorliegenden Erfindung sind zusätzlich zu den in den beiden vorstehenden Absätzen offenbarten bevorzugten Definitionen die Reste E gleich oder verschieden und ausgewählt aus den Gruppen der Formeln (III) und (IV), insbesondere entsprechen die Reste E der Struktur (III).

Gemäß einer weiteren bevorzugten Ausführungsform der vorliegenden Erfindung werden zusätzlich zu den in den drei vorstehenden Absätzen offenbarten bevorzugten Definitionen die Reste R ausgewählt aus den Strukturen (VI) und (VII).

Ein weiterer Gegenstand der vorliegenden Erfindung ist ein Verfahren zur Herstellung von mehrfachquaternären verzweigten Organopolysiloxanen gemäß der obigen Formel (I), das dadurch gekennzeichnet ist, dass in geeigneten molaren Verhältnissen gleiche oder verschiedene Organopolysiloxane enthaltend die folgenden Struktureinheiten

[YR₂SiO_{1/2}]ₐ, [YRSiO_{2/2}]_{b}, [YSiO_{3/2}]_{c}, [RSiO_{3/2}]_{d} und/oder [SiO_{4/2}]_{e,} (X)

mit gleichen oder verschiedenen Organopolysiloxanen der allgemeinen Formel (XI)

YR₂SiO-[R₂SiO]₍ₒ₋₁₎-SiR₂Y, (XI)

und mit gleichen oder verschiedenen Aminen der allgemeinen Formeln (XVI), (XVII), (XVIII) 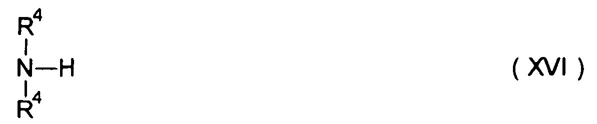 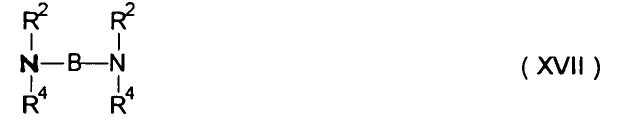 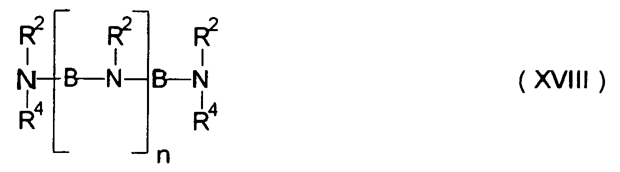 und gegebenenfalls mit mindestens einem der weiteren Amine der allgemeinen Formeln (XII), (XIII), (XIV), (XV) 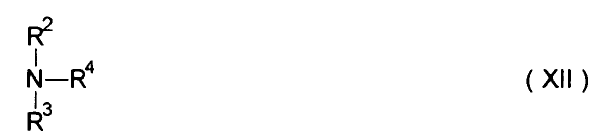 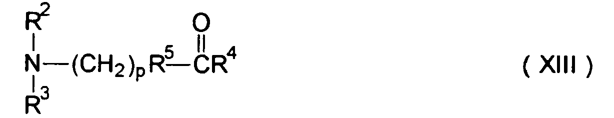 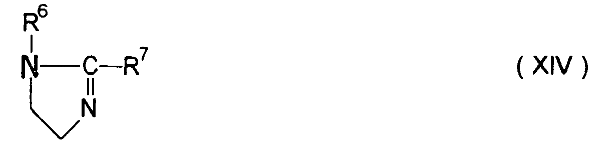 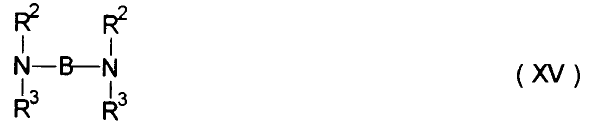 und mit gleichen oder verschiedenen Säuren der allgemeinen Formel HX diskontinuierlich oder kontinuierlich, gleichzeitig oder schrittweise, umgesetzt werden, wobei R wie zuvor für Formel (I) definiert ist,
Y gleich oder verschieden ist und R oder einen einwertigen, SiC-gebundenen, geradkettigen oder verzweigten Kohlenwasserstoffrest mit mindestens 4 Kohlenstoffatomen bedeutet, der in der Kohlenstoffatomkette ein oder mehrere Sauerstoffatome aufweisen kann und eine oder mehrere Epoxygruppen enthält, mit der Maßgabe, dass mindestens ein Rest Y nicht R ist,
die Reste R², R³, R⁴, R⁵, R⁶ und R⁷ sowie B wie zuvor für Formel (I) definiert sind,
HX eine organische oder anorganische Säure ist,
a eine Zahl von 0 bis 100,
b eine Zahl von 10 bis 1000,
c eine Zahl von 0 bis 100,
d eine Zahl von 0 bis 100,
e eine Zahl von 0 bis 10 ist,
mit der Maßgabe, daß die Summe a + b + c + d + e größer oder gleich 10 ist,
o eine Zahl von 1 bis 250,
n eine Zahl von 1 bis 10, und
p eine Zahl von 2 bis 8 ist.

In geeigneten molaren Verhältnissen bedeutet, daß die molaren Verhältnisse der Organopolysiloxane der allgemeinen Formel (X) und (XI), der Amine der allgemeinen Formeln (XII), (XIII), (XIV) und (XV), der Amine der allgemeinen Formeln (XVI, (VII), (XVIII) und der Säure HX so gewählt werden, daß mindestens ein Substituent R¹ im mehrfachquaternären Organopolysiloxan in der Struktureinheit [R¹RSiO_{2/2}]_{b} und/oder [R¹SiO_{3/2}]_{c} der allgemeinen Formel (I) die Bedeutung -(M-A-M-D)ₘ-M-E hat, wie zuvor für Formel (I) definiert und m eine Zahl von 1 bis 1000 ist.

Beispiele für organische oder anorganische Säuren HX sind ein- und mehrwertige Säuren, wie z.B. die anorganischen Säuren Salzsäure, Schwefelsäure und Phosphorsäure, die Monocarbonsäuren Ameisensäure, Essigsäure, Propionsäure, Buttersäure, Octansäure, Stearinsäure, Benzoesäure, die Dicarbonsäuren Maleinsäure, Phthalsäure, und Adipinsäure, aber auch Alkyl- und Arylsulfonsäuren, wie z.B. Methansulfonsäure, Butansulfonsäure und p-Toluensulfonsäure. Besonders bevorzugt sind die Monocarbonsäuren Essigsäure und Propionsäure.

Beispiele für den Rest Y in den Organopolysiloxanen der allgemeinen Formeln (X) und (XI) sind 3,4-Epoxybutyl-, 4,5-Epoxypentyl-, 5,6-Epoxyhexyl-, 7,8-Epoxyoctyl-, Glycidoxyethyl-, Glycidoxypropyl-, Glycidoxybutyl- sowie 2-(3,4-Epoxycyclohexyl)ethylreste. Besonders bevorzugt sind Glycidoxypropyl- und 2-(3,4-Epoxycyclohexyl)ethylreste.

Die Organopolysiloxane der allgemeinen Formeln (X) enthalten pro Molekül bevorzugt 1 bis 20, weiter bevorzugt 1 bis 10, insbesondere 1 bis 6 Epoxygruppen bzw. Reste Y. Eine weitere Maßgabe der Organopolysiloxane der allgemeinen Formeln (X) ist, daß die Summe der Koeffizienten a + b +c + d + e größer oder gleich 10 ist. Die Organopolysiloxane der allgemeinen Formeln (XI) enthalten pro Molekül zwei Epoxygruppen und sind somit α,ω-Diepoxypolysiloxane mit 2 bis 251 Diorganosiloxyeinheiten. Die Organopolysiloxane der allgemeinen Formeln (X) und (XI) haben Viskositäten von 2 bis 1000000 mm²/s, bevorzugt 5 bis 1000 mm²/s, insbesondere 10 bis 500 mm²/s bei 25°C.

Derartige Organopolysiloxane sind dem Fachmann bekannt und kommerziell verfügbar. Geeignete Verfahren zur Herstellung der Organopolysiloxane der allgemeinen Formeln (X) und (XI) sind z.B. die übergangsmetallkatalysierte Hydrosilylierung von endständig ungesättigten Epoxyverbindungen mit Si-H-Gruppen enthaltenden Organopolysiloxanen. Beispiele für geeignete endständig ungesättigte Epoxyverbindungen sind 3,4-Epoxybut-1-en, Glycidoxyallylether und 4-Vinylcyclohexenoxid. Ein weiteres Verfahren zu Herstellung derartiger Organopolysiloxane besteht in der Epoxidierung von C=C-Doppelbindungen tragenden Organopolysiloxanen.

Die Amine der allgemeinen Formeln (XII), (XIII), (XIV), (XV) weisen mindestens ein sekundäres, bevorzugt mindestens ein tertiäres Stickstoffatom auf, welches mit der Epoxygruppe der Organopolysiloxane der allgemeinen Formeln (X) und (XI) in an sich bekannter Weise reagiert. Dabei ist im Fall von tertiären Aminen pro Equivalent an tertiären Stickstoffatomen mindestens ein Equivalent einer organischen oder anorganischen Säure HX notwendig, um eine Umsetzung mit der Epoxygruppe des Organopolysiloxans zu ermöglichen. Alternativ ist auch der Einsatz der zuvor durch separate Reaktion des Amins mit einem Equivalent einer Säure HX erhaltenen Ammoniumsalze möglich.

Beispiele für geeignete Amine der Formel (XII) sind Trimethylamin, Dimethylethylamin, Dimethylbutylamin, Dimethyloctylamin, Dimethylisotridecylamin, Dimethylkokosamin, Dimethylmyristylamin, Dimethylstearylamin, Diisotridecylmethylamin, N-Ethylmorpholin, Butylmethylstearylamin, Methyloctylamin, Triethanolamin, Dimethylethanolamin, ethoxyliertes Dimethylethanolamin, N-Butyldiethanolamin, N,N-Dimethylaminodiglycol, Dihexylamin, Tris-(2-ethylhexyl)amin, Dimethyl-C12/C14-alkylamin, Methylcyclohexylamin, Dimethylbenzylamin, Dimethylanilin, 2-(Diethylamino)ethylamin und N-Ethyl-N-(2-hydroxyethylamin.

Beispiele für geeignete Amine der Formel (XIII) sind [2-(Dimethylamino)ethyl]octansäureester, [2-(Dimethylamino)ethyl]octansäureamid, [3-(Dimethylamino)propyl]stearinsäureester, [3-(Dimethylamino)propyl]stearinsäureamid, [3-(Dimethylamino)propyl]kokosester und [3-(Dimethylamino)propyl]kokosamid.

Beispiele für geeignete Amine der Formel (XIV) sind 1,2-Dimethylimidazol, 1-Methyl-2-ethylimidazol, 1-Methylimidazol, 1-Vinylimidazol, 1-(3-Aminopropyl)-2-methylimidazol, 1-Octyl-2-methylimidazol, 1-Dodecyl-2-methylimidazol, 1-Octadecyl-2-methylimidazol und 1-(3-Hydroxypropyl)-2-methylimidazol.

Beispiele für geeignete Amine der Formel (XV) sind N,N,N',N'-Tetramethyl-1,3-propandiamin, N,N-Diethyl-N',N'-dimethyl-1,3-propandiamin, N,N,N',N'-Tetramethyl-1,6-hexandiamin, N,N,N',N'-Tetramethyl-4,4'-diaminodicyclohexanmethan, N,N,N',N'-Tetramethylisophorondiamin, 2-(Diethylamino)ethylamin, 2-(Dimethylamino)propylamin, 2-(Ethylamino)ethylamin, N,N,N',N'-Tetramethyl-4,4'-diaminodiphenylmethan, Diethylentriamin, N,N-Bis-(3-aminopropyl)methylamin, N,N-Dimethyldipropylentriamin, (N-Cyclohexyl-N-methyl)aminoethylaminopropyltrimethoxysilan, Bis-(3-dimethylaminopropyl)amin, N,N,N',N",N"-Pentamethyldiethylentriamin, N,N,N',N",N"-Pentamethyldipropylentriamin, N-(2-Aminoethyl)ethanolamin. Diazabicyclooctan, N,N-Dimethylaminoethyl-N'-methylpiperazin, Dimorpholinodiethylether, Tris-(3-dimethylaminopropyl)amin und N,N,N',N'-Tetramethyl-p-diaminobenzen. Derartige Amine der allgemeinen Formeln (XII), (XIII), (XIV), (XV) sind dem Fachmann bekannt und kommerziell in großer Vielfalt verfügbar.

Die Amine der allgemeinen Formeln (XVI), (XVII) und (XVIII) weisen entweder ein sekundäres, oder mindestens zwei sekundäre, oder mindestens ein sekundäres und ein tertiäres oder, bevorzugt, mindestens zwei tertiäre Stickstoffatome auf. Charakteristisch für die Amine der allgemeinen Formeln (XVI), (XVII) und (XVIII) ist weiterhin, dass sie in der Lage sind, mit mindestens 2, aber auch mit 3 oder weiteren Epoxygruppen im siliciumgebundenen Rest Y der Organopolysiloxane der allgemeinen Formeln (X) und (XI) in an sich bekannter Weise zu reagieren. Dabei ist im Fall von tertiären Aminen pro Equivalent an tertiären Stickstoffatomen mindestens ein Equivalent einer organischen oder anorganischen Säure HX notwendig, um eine Umsetzung mit der Epoxygruppe des Organopolysiloxans zu ermöglichen. Alternativ ist auch der Einsatz der durch die Reaktion des Amins mit einem Equivalent einer Säure HX je Stickstoffequivalent des Amins erhaltenen Ammoniumsalze möglich. Die eingesetzten Amine der allgemeinen Formeln (XVI), (XVII) und (XVIII) können dabei gleich oder verschieden sein und während der Herstellung der erfindungsgemäßen mehrfachquaternären Organopolysiloxane der allgemeinen Formel (I) sowohl mit 2 Epoxygruppen des Organopolysiloxans der allgemeinen Formeln (X), mit 2 Epoxygruppen des Organopolysiloxans der allgemeinen Formeln (XI), als auch mit je einer Epoxygruppe der Organopolysiloxane der allgemeinen Formeln (X) und (XI) reagieren.

Beispiele für geeignete Amine der Formel (XVI) sind Pyrrolidin, Morpholin, 2,6-Dimethylmorpholin, Piperazin, N-Methylpiperazin, Imidazol, Dimethylamin, Diethylamin, Dihexylamin, Di-(2-ethylhexyl)amin, Ditridecylamin, Dioctadecylamin, N-Methylaminopropyltrimethoxysilan, N-Ethylbutylamin, N-Ethyl-1,2-dimethylpropylamin, Di-(2-hydroxyethyl)amin, Di-(2-methoxyethyl)amin, N-Methylcyclohexylamin, Dicyclohexylamin, N-Ethylanilin, 2-Ethylaminoethylamin, N-Methylethanolamin, N-Butylethanolamin, 3-(2-Hydroxyethylamino)-1-propanol und Diisopropanolamin.

Beispiele für geeignete Amine der Formel (XVII) sind N,N'-Dimethylpiperazin, Diazabicyclooctan, Dimorpholinodiethylether, N,N,N',N'-Tetramethyl-p-diaminobenzen, N,N,N',N'-Tetramethyl-1,3-propandiamin, N,N-Diethyl-N',N'-dimethyl-1,3-propandiamin, N,N,N',N'-Tetramethyl-1,6-hexandiamin, N,N,N',N'-Tetramethyl-4,4'-diaminodicyclohexanmethan, N,N,N',N'-Tetramethylisophorondiamin und N,N,N',N'-Tetramethyl-4,4'-diaminodiphenylmethan. Ein weiteres Beispiel ist Triethylendiamin.

Beispiele für geeignete Amine der Formel (XVIII) sind N,N,N',N",N"-Pentamethyldiethylentriamin, N,N,N',N",N"-Pentamethyldipropylentriamin, N,N,N',N",N''',N'''-Hexamethyltriethylentetramin und Tris-(3-dimethylaminopropyl)amin. Geeignete Amine der allgemeinen Formeln (I), (XVII) und (XVIII) sind dem Fachmann bekannt und kommerziell in großer Vielfalt verfügbar.

Erwartungsgemäß kommt es bei der Herstellung eines verzweigten Organopolysiloxans der allgemeinen Formel (I) zur Umsetzung je eines Stickstoffatoms eines Amins der allgemeinen Formeln (XVI), (XVII) und (XVIII) mit je einer Epoxygruppe eines Organopolysiloxans der allgemeinen Formeln (X) und einer Epoxygruppe eines Organopolysiloxans der allgemeinen Formel (XI). Das Organopolysiloxan (X) wird dadurch seitenständig mit dem Organopolysiloxan (XI) verknüpft. Als Nebenreaktion kann es durch Umsetzung eines Amins der allgemeinen Formeln (XVI), (XVII) und (XVIII) mit 2 oder mehr Epoxygruppen von Molekülen des Organopolysiloxans der allgemeinen Formel (X) zur Bildung von "vernetzten" mehrfachquaternären Organopolysiloxane. Dies führt jedoch nicht aus dem Bereich der vorliegenden Erfindung heraus.

Die molaren Verhältnisse der Organopolysiloxane der allgemeinen Formel (X), der Organopolysiloxane der allgemeinen Formel (XI), der Amine der allgemeinen Formeln (XII), (XIII), (XIV) und (XV), der Amine der allgemeinen Formeln (XVI), (VII), (XVIII) und der Säure HX werden zur Herstellung der erfindungsgemäßen mehrfachquaternären Organopolysiloxane der allgemeinen Formel (I) so gewählt, daß mindestens ein Substituent R¹ im mehrfachquaternären Organopolysiloxan in der Struktureinheit [R¹RSiO_{2/2}]_{b} und/oder [R¹SiO_{3/2}]_{c} der allgemeinen Formel (I) die Bedeutung -(M-A-M-D)ₘ-M-E hat und m eine Zahl von 1 bis 1000 ist.

Es ist zum Beispiel möglich, von einem Organopolysiloxan der Formel (X) auszugehen, das einem Siloxanpolymer der durchschnittlichen Zusammensetzung R₃SiO-(R₂SiO)₁₀-(YRSiO)₂-SiR₃ mit R = Methyl, Y = Glycidoxypropyl und statistischer Verteilung der -(R₂SiO)- und (YRSiO)-Einheiten entspricht. Organopolysiloxan (XI) soll z.B. der Formel YR₂SiO-(R₂SiO)₂₀-SiR₂Y ebenfalls mit = Methyl und Y = Glycidoxypropyl entsprechen. Als Amin der allgemeinen Formel (XII) wird Dimethyloctylamin, als Amin der allgemeinen Formel (XVII) N,N,N',N'-Tetramethyl-1,3-propandiamin und als Säure HX Essigsäure gewählt. Um ein erfindungsgemäßes mehrfachquaternäres Organopolysiloxan der allgemeinen Formel (I) mit durchschnittlich 2 Substituenten der Bedeutung -(M-A-M-D)ₘ-M-E mit im Durchschnitt m = 2 zu erhalten, werden die molaren Verhältnisse Organopolysiloxan (X) : Organopolysiloxan (XI) : Dimethyloctylamin : N,N,N',N'-Tetramethyl-1,3-propandiamin : Essigsäure = 1 : 4 : 2 : 4 : 10 gewählt. Durch einfache Variation der molaren Verhältnisse ist es dem Fachmann also leicht möglich, eine Vielzahl von mehrfachquaternären Organopolysiloxanen mit unterschiedlichen Molgewichten, Substituenten, Substitutionsgraden und Gehalten an quaternären Stickstoffatomen zu synthetisieren und so die physikochemischen und anwendungstechnischen Eigenschaften der erfindungsgemäßen mehrfachquaternären Organopolysiloxane gezielt zu beeinflussen. Ein weiterer Vorteil ist es, daß es dem Fachmann möglich ist, zur Herstellung der mehrfachquaternären Organopolysiloxane auf Rohstoffe mit unerwünschten toxikologischen oder ökotoxikologischen Eigenschaften zu verzichten. Ebenso kann auf den Einsatz von einzelnen Komponenten im Überschuß zur Erzielung befriedigender Umsätze verzichtet werden. Durch den Einsatz der Amine der allgemeinen Formeln (XII), (XIII), (XIV), (XV), also von Aminen, die zu einem Rest des Typs E führen, wird ein unkontrollierter Molekülaufbau mit weitgehender Vemetzung oder Vergelung der Produkte verhindert.

Bei dem erfindungsgemäßen Verfahren orientiert sich die Stöchiometrie der Reaktion am molaren Verhältnis der sekundären und tertiären Stickstoffatome in den Aminen zum Verhältnis der Säure und der Epoxygruppen in den Organopolysiloxanen (X) und (XI).

Dabei ist zu beachten, daß sekundäre Stickstoffatome mit zwei, tertiäre mit einer Epoxygruppe reagieren können und daß zur ersten Umsetzung des sekundären Stickstoffs kein Equivalent Säure, zur weiteren Umsetzung des dabei gebildeten und jedes anderen tertiären Stickstoffatoms zu einem quaternierten Stickstoffatom ein Equivalent Säure je Stickstoff und Epoxygruppe notwendig ist. Die entsprechenden Verhältnisse können so gewählt werden, daß ein Ausgangsstoff im Überschuß oder im Unterschuß vorliegt. Bevorzugt werden equimolare Verhältnisse zwischen den Reaktanden. Es liegt im Wissen des Fachmannes, abhängig von der Anzahl der tertiären und sekundären Stickstoffatome der Epoxygruppen in den Organopolysiloxanen (X) und (XI), also der Funktionalität der Edukte, und der gewünschten Struktur des mehrfachquaternären Organopolysiloxans der allgemeinen Formel (I), die molaren Verhältnisse bei dem erfindungsgemäßen Verfahren so einzustellen, z.B. experimentell durch das Durchführen von Versuchen, dass Produkte mit den gewünschten Eigenschaften erhalten werden.

Weiterhin ist es möglich, die molaren Verhältnisse so zu wählen, dass auf die Verwendung der Amine der allgemeinen Formeln (XII), (XIII), (XIV) und (XV) verzichtet werden kann und anstelle derer dieselbe molare Menge der Amine der allgemeinen Formel (XVII) oder (XVIII) verwendet wird. Im erfindungsgemäßen Organopolysiloxan der allgemeinen Formel (I) enthalten dann die Gruppen A mindestens 2 quaternierte Stickstoffatome und die Gruppen E genau 1 quaterniertes und mindestens ein weiteres tertiäres, gegebenenfalls protoniertes, d.h. nicht permanent quaterniertes Stickstoffatom.

Bei dem erfindungsgemäßen Verfahren können inerte, organische Lösungsmittel mit benutzt werden, obwohl die Mitverwendung von inerten, organischen Lösungsmitteln nicht bevorzugt ist.

Zur Herstellung der mehrfachquaternären Organopolysiloxane (I) nach dem erfindungsgemäßen Verfahren sind grundsätzlich keine Katalysatoren notwendig. Eine Mitverwendung von Katalysatoren, die besonders zur Härtung von Epoxidharzen geeignet sein sollten, ist jedoch unschädlich. Geeignete Katalysatoren zum Einsatz im erfindungsgemäßen Verfahren können z.B. Phenole und sekundäre Alkohole sein.

Das erfindungsgemäße Verfahren wird bei Temperaturen von 10 bis 200°C durchgeführt. Um technisch hinreichende Reaktionsgeschwindigkeiten zu erzielen, werden Temperaturen > 60°C bevorzugt. Insbesondere sind Temperaturen von 70 bis 120°C bevorzugt. Vorzugsweise wird bei Umgebungsdruck, also bei 900 bis 1100 hPa gearbeitet. Im Fall des Einsatzes von leichterflüchtigen Komponenten ist aber auch das Arbeiten bei erhöhten Drücken möglich. Das erfindungsgemäße Verfahren kann aber ebenso bei verminderten Drücken durchgeführt werden.

Im erfindungsgemäßen Verfahren können die Edukte sowohl im Eintopfverfahren, bei dem alle Komponenten von Beginn an homogen vermischt vorliegen, als auch durch nacheinander erfolgende Dosierung einzelner Edukte miteinander in Kontakt gebracht werden. Die Reihenfolge der Zugabe der Edukte kann dabei beliebig gewählt werden. Es ist dem Fachmann möglich, eine große Zahl geeigneter Zugabereihenfolgen zu finden, die die Herstellung der erfindungsgemäßen mehrfachquaternären Organopolysiloxane erlaubt. So ist es zum Beispiel möglich, die Organopolysiloxane der allgemeinen Formel (X) zuerst mit den Aminen der allgemeinen Formeln (XVI), (XVII) und (XVIII) und nachfolgend mit den Organopolysiloxanen der allgemeinen Formel (XI) und den Aminen der allgemeinen Formeln (XII), (XIII), (XIV) und (XV) umzusetzen. Eine weitere mögliche Variante ist es, die Organopolysiloxane und Amine zu mischen, zu erwärmen und bei Erreichen der gewünschten Reaktionstemperatur die Säure HX zuzugeben.

Das erfindungsgemäße Verfahren kann ansatzweise, halbkontinuierlich oder vollkontinuierlich durchgeführt werden.

Bei einer bevorzugten Ausführungsform des erfindungsgemäßen Verfahrens werden solche Organopolysiloxane der allgemeinen Formel (X) eingesetzt, bei denen in der Struktureinheit [YR₂SiO_{1/2}]ₐ Y die Bedeutung R hat, d. h., die bevorzugt einzusetzenden Organopolysiloxane weisen neben den anderen in Formel (X) definierten Struktureinheiten die Struktureinheit [R₃SiO_{1/2}]ₐ auf.

Bei einer weiteren bevorzugten Ausführungsform des erfindungsgemäßen Verfahrens sind zusätzlich zu der im vorstehenden Absatz offenbarten bevorzugten Definition die Indices c, d und e der Formel (X) gleich 0.

Bei einer weiteren bevorzugten Ausführungsform des erfindungsgemäßen Verfahrens sind zusätzlich zu den in den beiden vorstehenden Abschnitten offenbarten bevorzugten Definitionen die einzusetzenden Amine ausgewählt aus den Aminen der allgemeinen Formeln (XVI) und (XVII).

Bei einer weiteren bevorzugten Ausführungsform des erfindungsgemäßen Verfahrens sind zusätzlich zu den in den drei vorstehenden Absätzen offenbarten bevorzugten Definitionen die ggfs. weiteren einzusetzenden Amine aus denen der allgemeinen Formel (XIII) ausgewählt.

Ein weiterer Gegenstand der Erfindung sind Zubereitungen, die mindestens ein erfindungsgemäßes mehrfachquaternäres Organopolysiloxan enthalten. Unter erfindungsgemäßen Zubereitungen versteht man z.B. Lösungen, Mischungen, Emulsionen und Dispersionen der erfindungsgemäßen mehrfachquaternären Organopolysiloxane.

Als Lösungsmittel kommen je nach molekularem Aufbau der mehrfachquaternären Organopolysiloxane unpolare und polare Lösungsmittel in Betracht. Geeignete unpolare Lösungsmittel sind z.B. Toluen, Xylen, Benzen, Ethylbenzen und chlorierte Kohlenwasserstoffe. Geeignete polare Lösungsmittel sind z.B. ein- und mehrwertige Alkohole mit einem Molekulargewicht von 50 bis ca. 2000 g/mol. Derartige zum erfindungsgemäßen Einsatz geeignete mehrwertige Alkohole sind dem Fachmann bekannt und in großer Anzahl kommerziell erhältlich. Beispiele sind Glyzerin, Ethylenglycol, Polyethylenglycol, Polypropylenglycol, Polyethylenpolypropylenmischpolymerisate mit statistischer oder blockartiger Verteilung, Dipropylenglycol, Dipropylenglycolmonoethylether, Butyldiglycol, 1,3-Propandiol, Pentaerythrit und besonders bevorzugt 1,2-Propandiol und Dipropylenglycol. Je nach Einsatz der erfindungsgemäßen mehrfachquaternären Organopolysiloxane ist es dem Fachmann möglich, auch weitere geeignete Lösungsmittel auszuwählen.

Des weiteren ist es möglich, die erfindungsgemäßen mehrfachquaternären Organopolysiloxane in bestehende Produkte einzubringen, bzw. mit anderen Verbindungen zu mischen und diese Mischungen dann weiter zu verarbeiten. So können die erfindungsgemäßen mehrfachquaternären Organopolysiloxane z.B. mit anderen Siliconpolymeren, wie Aminosiliconölen, Polyethersiloxanen, Siliconwachsen, Alkylpolyethersiloxanen, Polydimethylsiliconölen, Polydimethylsiloxanbetainen, Polydimethylsiloxandiolen, Siliconharzen, aber auch mit Mineralölen, natürlichen und synthetischen Wachsen und weiteren Verbindungen und Polymeren gemischt und als Mischung oder nach einem weiteren Verarbeitungsschritt, z.B. nach Emulgieren oder Dispergieren, eingesetzt werden.

Ist eine Applikation der erfindungsgemäßen mehrfachquaternären Organopolysiloxane aus wäßrigem Medium erwünscht, können Emulsionen oder Dispersionen hergestellt werden. Derartige Emulsionen und Dispersionen können, insbesondere bei Verwendung von erfindungsgemäßen mehrfachquaternären Organopolysiloxanen mit einem relativ geringen Anteil an quatemierten Stickstoffatomen, zusätzlich zu Wasser, Dispergiermittel, Verdickungsmittel, Biocide und weitere Bestandteile enthalten. Geeignete Dispergiermittel sind vorzugsweise nichtionische, anionische oder kationische Emulgatoren. In Produkten zur Verbesserung des Weichgriffs von Textilien, Papier- und Lederprodukten können ebenso organische, quaternierte Ammoniumverbindungen und/oder Betaine enthalten sein. Geeignete kationenaktive Emulgatoren sind z.B. Didecyldimethylammoniumchlorid, Dioctadecyldimethyl-ammoniumchlorid sowie deren entsprechende Hydroxide, aber auch verschiedene Imidazoliniumverbindungen. Weiterhin sind Betaine als Emulgatoren geeignet, z.B. Fettsäureamidoalkylbetain, Kokosamidopropylbetain, sowie Mischungen von Betainen bzw. kationenaktiven Emulgatoren mit nichtionogenen Verbindungen, beziehungsweise ausschließlich nichtionogene oder Mischungen verschiedener nichtionogener Emulgatoren. Nichtionogene Emulgatoren können durch Anlagerung von Ethylenoxid und anderen Alkylenoxiden an Verbindungen mit acidem Wasserstoff, aber auch durch eine Reihe weiterer Verfahren erhalten werden. Eine große Anzahl solcher nichtionogener Emulgatoren sind für den Einsatz geeignet. Insbesondere geeignet sind Fettsäurepartialester von mono- oder polyfunktionellen Alkoholen mit 1 bis 12 Kohlenstoffatomen im Alkohol. Beispiele für derartige polyfunktionelle Alkohole sind Ethylenglycol, Glycerol, Xylitol, Sorbitol, Sorbitan und Pentaerythritol. Der Fettsäureesterteil dieser nichtionogenen Emulgatoren besteht zumeist aus 12 bis 22 Kohlenstoffatomen und kann z.B. ein Lauryl-, ein Oleyl-, ein Stearyl- oder ein Myristylrest sein. Derartige Fettsäurepartialester von polyfunktionellen Alkoholen können weiterhin mit Alkylenoxiden, wie z.B. Ethylenoxid, umgesetzt werden. Beispiel für derartige nichtionogene Emulgatoren sind ethoxyliertes Sorbitanstearat oder ethoxyliertes Sorbitanoleat. Weiterhin können auch Anlagerungsprodukte von Alkylenoxiden an aliphatische, geradkettige oder verzweigte Alkohole mit 6 bis 22 C-Atomen, z.B. Isotridecylethoxylat, oder an alkylierte Phenole, z.B. Nonylphenolethoxylate, verwendet werden. Des weiteren können alkoxylierte Fettamine als nichtionogene Emulgatoren Verwendung finden. Gut geeignet zur Verwendung als Emulgatoren sind auch hydrophil modifizierte Organopolysiloxane, z.B. Organopolysiloxane in denen 1-35% der Siliciumatome mit seitenständigen Polyethergruppen, die 2-50, und vorzugsweise 6-35 angelagertes Ethylenoxid und/oder Propylenoxid in statistischer oder blockartiger Verteilung enthalten. Die weiteren an Si-Atome gebundenen Substituenten in derartigen Organopolysiloxanen können aus einer oder mehreren Alkylgruppen mit 1-20 Kohlenstoffatomen oder Alkenylgruppen mit 2-20 Kohlenstoffatomen bestehen. Weitere geeignete nichtionogene Emulgatoren sind Alkylpolyglucoside. Zum Einsatz in den erfindungsgemäßen Zusammensetzungen sind weiterhin anionische Tenside geeignet, z.B. Alkyl- oder Arylpolyalkylenglycolethercarbonsäuren, Alkyl- oder Arylpolyalkylenglycolethersulfate, Alkylbenzolsulfonate, Alkylbenzolsulfonsäuren, Aminsalze von Carbonsäuren, Fettalkoholpolyalkylenglycolethercarboxylate und -sulfate, Fettalkoholsulfate, Paraffinsulfonate, Phosphorsäureester, Rizinusölsulfonate und Sulfosuccinate. Besonders geeignet zum Einsatz in den erfindungsgemäßen Zusammensetzungen sind kationische und nichtionische Emulgatoren und Mischungen von kationischen und nichtionischen Emulgatoren. Geeignete Emulgatoren sind dem Fachmann bekannt und kommerziell erhältlich. Geeignete Verdickungsmittel sind z.B. organisch modifizierte Schichtsilicate, z.B. organisch modifizierter Bentonit, Polyacrylate, Methylcellulose und andere Cellulosederivate, Rhizinusölderivate, Polyurethan-Polyharnstoff-Polyether-Copolymere, Poly-N-vinylpyrrolidon und eine Reihe weiterer Substanzen, die dem Fachmann bekannt und kommerziell erhältlich sind. Beispiele für Biocide oder Konservierungsmittel sind bestimmte quaternäre Ammoniumverbindungen, Formaldehyd bzw. Formaldehyddepotstoffe, N-Methylisothiazolinon, 5-Chlor-N-methylisothiazolinon, 1,2-Benzisothialzolin-3-on und dessen Salze. Derartige bakterizid wirkende Bestandteile sind dem Fachmann bekannt und kommerziell erhältlich.

Die erfindungsgemäßen mehrfachquaternären Organopolysiloxane und sie enthaltende Zubereitungen können zur Weichgriffausrüstung von Textilien, als Prozeßhilfsmittel zur Herstellung und zur Ausrüstung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege eingesetzt werden.

Unter Fasern und Textilien versteht man hierbei organische Fasern in Form von Fäden, Garnen, Vliesen, Matten, Strängen, unter Textilien alle gewebten, gestrickten, gewirkten Textilien in Form von Stoffbahnen, Kleidungsstücken oder Teilen von Kleidungsstücken und anderen Erzeugnissen, wie z.B. Planen oder Möbelstücken. Die mit den erfindungsgemäßen mehrfachquaternären Organopolysiloxanen behandelten Fasern können aus Keratin, insbesondere Wolle, Baumwolle, Polyvinylalkohol, Vinylacetat, Rayon, Hanf, Seide, Polypropylen, Polyester, Polyurethan, Polyamid, Polyacrylat, Cellulose und Gemischen aus zwei oder mehr solcher Fasern bestehen. Die Faser- und Textilmaterialien können sowohl natürlichen oder synthetischen Ursprungs sein. Die Applikation der erfindungsgemäßen mehrfachquaternären Organopolysiloxane zur Ausrüstung von Fasern und Textilien erfolgt in Form von Zubereitungen, insbesondere aus wäßrigen Zubereitungen. Applikationsverfahren sind dem Fachmann bekannt und umfassen Ausziehverfahren, Foulard und Jetfärbemaschinen, aber auch Tauchbäder, Gieß- und Streichverfahren, Sprühverfahren, Aufwalzen, Klotzen und Drucken. Durch Anwendung eines gezielt, gegebenenfalls durch Versuche, ausgewählten, erfindungsgemäßen mehrfachquaternären Organopolysiloxans ist es dem Fachmann möglich, den damit ausgerüsteten Textilien und Fasern einen angenehmen und weichen Griff zu verleihen und dabei Textilien und Fasern zu erhalten, deren Wasseraufnahmefähigkeit nicht vermindert oder verlangsamt ist. Die Textilien können unter üblichen Bedingungen gewaschen werden, ohne dass es zu einer Verminderung der Weichgriffeigenschaften oder der Wasseraufnahmefähigkeit kommt. Die erfindungsgemäßen mehrfachquaternären Organopolysiloxane können weiterhin zur Hydrophilierung von Fasern, Textilien und Nonwovens eingesetzt werden.

Die erfindungsgemäßen mehrfachquaternären Organopolysiloxane können weiterhin in Wasch- und Reinigungsmitteln, auch in Kombination mit ausgewählten, für solche Produkte typischen, anionischen Tensiden verwendet werden. Durch die Anwendung kann insbesondere ein verbesserter Griff der Textilien nach der Wäsche erreicht werden. In Reinigungsmitteln kann z.B. eine Verbesserung der Reinigungswirkung durch bessere Substratbenetzung erreicht werden. Bevorzugt sind hier Reiniger für harte Oberflächen, wie z.B. Fußböden, Fliesen und Keramik.

Ein weiterer Schwerpunkt ist die Verwendung in Polituren und Pflegemitteln zur Behandlung harter Oberflächen. Bevorzugt sind hier lackierte Oberflächen, auf denen die erfindungsgemäßen mehrfachquaternären Organopolysiloxane eine gute Haftung zeigen und z.B. Glanz, Kratzfestigkeit und Antistatik verbessern können.

Weiterhin können die erfindungsgemäßen mehrfachquaternären Organopolysiloxane in Formulierungen für den Einsatz in automatischen Autowäschen eingesetzt werden. Eine nach der Wäsche aufgesprühte, diese enthaltende Zubereitung verbessert z.B. den Glanz und erhöht die Trocknungsgeschwindigkeit im nachfolgenden Trockenschritt.

Eine weitere Einsatzmöglichkeit der erfindungsgemäßen verzweigten mehrfachquaternären Organopolysiloxane besteht in der Verbesserung der Korrosionsbeständigkeit von Metallen während und nach mechanischer Bearbeitung unter Zuhilfenahme von Kühlschmiermitteln, denen die erfindungsgemäßen Organopolysiloxane zugesetzt wurden.

Des weiteren können die erfindungsgemäßen mehrfachquaternären Organopolysiloxane auch in Formulierungen zur Haut- und Haarpflege wie Shampoos, Haarkonditioniermitteln, Haarsprays, Waschlotionen, Seifen, Cremes oder Rasierschäumen verwendet werden.

### Beispiele

Die vorliegende Erfindung wird durch die folgenden Ausführungsbeispiele näher beschrieben und erläutert. Die Beispiele 1 und 2 illustrieren die Herstellung von Ausgangsverbindungen gemäß Formeln (X) und (XI), die dann nach dem erfindungsgemäßen Verfahren miteinander umgesetzt werden (Beispiele 3 und 4).

### Beispiel 1: Herstellung eines Organopolysiloxans der allgemeinen Formel (X)

484,6 g (0,1 mol) eines Organosiloxans der Struktur Me₃SiO-(Me₂SiO)₆₀-(HMeSiO)₄-SiMe₃ (Me = Methyl) wurden in 400 ml Toluen in einem 2I-Dreihalskolben mit Rückflußkühler, Thermometer, Magnetrührer und Tropftrichter auf 110°C erwärmt, mit 0,8 ml einer 0,5%igen Lösung von Hexachloroplatinsäure in Isopropanol versetzt und anschließend unter Rühren 45,6 g (0,4 mol) Allylglycidylether zugegeben. Während der Reaktion kam es zu einem Temperaturanstieg auf 116°C. Bei dieser Temperatur wurde weitere 4 Stunden gerührt. Eine IR-spektroskopische Untersuchung ergab einen Umsatzgrad der H-Si-Gruppen von 98,3%. In einem Rotationsverdampfer wurde das Toluen abrotiert und das Produkt für weitere 2 Stunden bei einer Temperatur von 110°C und einem Druck von 8 mbar entflüchtigt. Es wurde ein leicht gelbliches, klares Epoxysiloxan einer Viskosität von 127,3 mm²/s bei 25°C erhalten.

### Beispiel 2: Herstellung eines Organopolysiloxans der allgemeinen Formel (XI)

753,4 g (0,1 mol) eines Organosiloxans der Struktur HMe₂SiO-(Me₂SiO)₁₀₀-SiMe₂H (Me = Methyl) wurden in 600 ml Toluen in einem 2I-Dreihalskolben mit Rückflußkühler, Thermometer, Magnetrührer und Tropftrichter auf 110°C erwärmt, mit 1,2 ml einer 0,5%igen Lösung von Hexachloroplatinsäure in Isopropanol versetzt und anschließend unter Rühren 22,9 g (0,2 mol) Allylglycidylether zugegeben. Während der Reaktion kam es zu einem Temperaturanstieg auf 116°C. Bei dieser Temperatur wurde weitere 4 Stunden gerührt. Eine IR-spektroskopische Untersuchung ergab einen Umsatzgrad der H-Si-Gruppen von 99,6%. In einem Rotationsverdampfer wurde das Toluen abrotiert und das Produkt für weitere 2 Stunden bei einer Temperatur von 110°C und einem Druck von 8 mbar entflüchtigt. Es wurde ein hellgelbes Epoxysiloxan einer Viskosität von 122,5 mm²/s bei 25°C erhalten.

### Beispiel 3: Herstellung eines erfindungsgemäßen mehrfachquaternären Organopolysiloxans

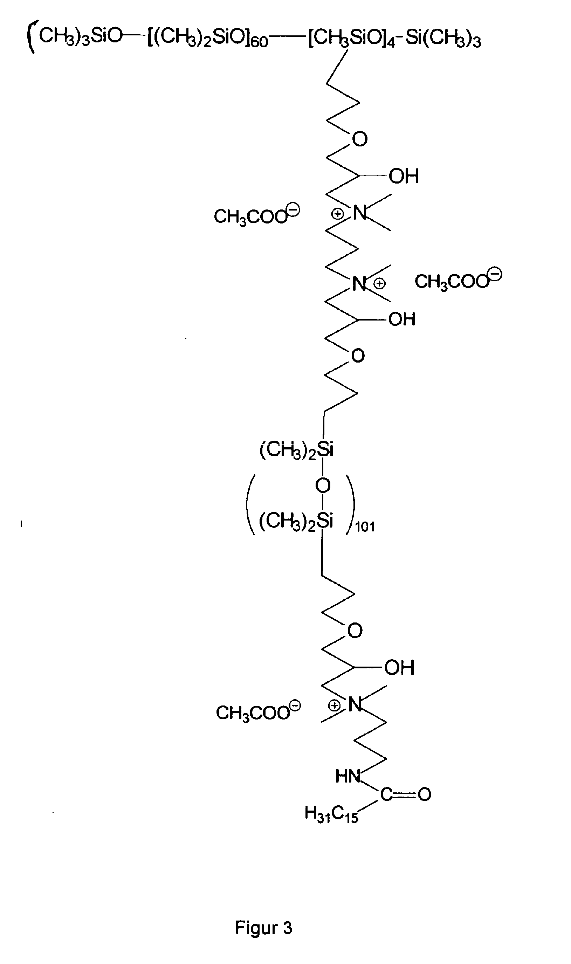

26,5 g (0,005 mol) des Epoxysiloxans aus Beispiel 1 wurden in einem 250 ml-Dreihalskolben mit Rückflußkühler, Thermometer und Rührer mit 155,25 g (0,02 mol) des Epoxysiloxans aus Beispiel 2, 2,6 g (0,02 mol), N,N,N',N'-Tetramethyl-1,3-propandiamin, 6,8 g (0,02 mol) Kokos(dimethylaminopropyl)amid und 3,6 g (0,06 mol) Eisessig bei Raumtemperatur gemischt, unter Rühren auf 110°C erwärmt. Bei dieser Temperatur wurde für eine weitere Stunde gerührt. Die anfänglich trübe Reaktionsmischung wird wenige Minuten nach Erreichen der Reaktionstemperatur klar. Man erhält ein gelbes, klares mehrfachquatemäres Organopolysiloxan mit einer Viskosität von 12000 mPas bei 25°C und einem Gehalt an quaternären Stickstoffatomen von 0,431%. Die Strukturformel des erhaltenen, erfindungsgemäßen Organopolysiloxans ist in Figur 3 gezeigt bzw. veranschaulicht.

### Beispiel 4: Herstellung eines erfindungsgemäßen mehrfachquaternären Organopolysiloxans

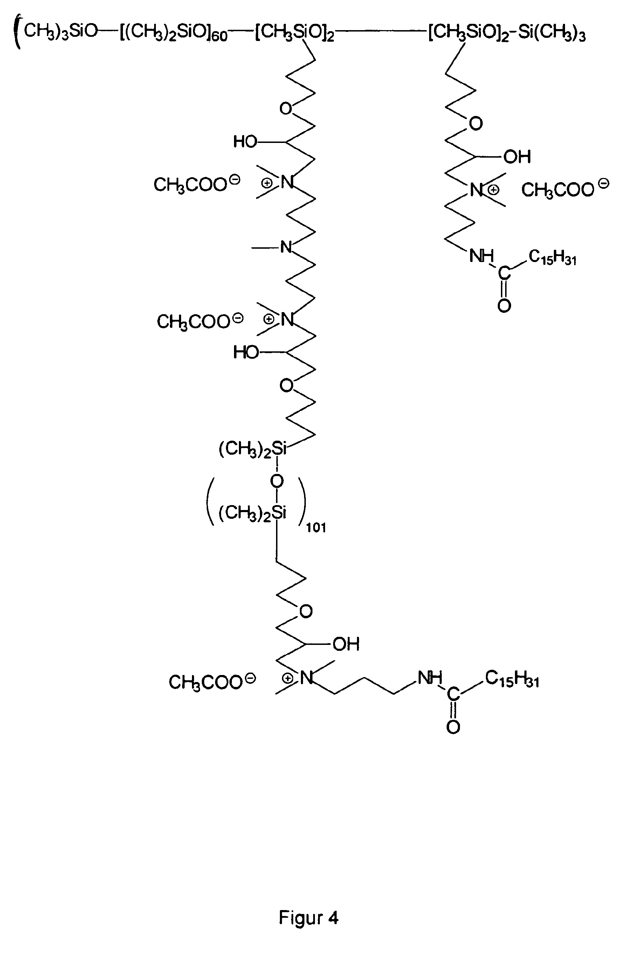

53 g (0,01 mol) des Epoxysiloxans aus Beispiel 1 wurden in einem 250 ml-Dreihalskolben mit Rückflußkühler, Thermometer und Rührer mit 155,25 g (0,02 mol) des Epoxysiloxans aus Beispiel 2, 4,02 g (0,02 mol), N,N,N',N",N"-Pentamethyldipropylentriamin, 13,6 g (0,04 mol) Kokos(dimethylaminopropyl)amid und 4,8 g (0,08 mol) Eisessig bei Raumtemperatur gemischt, unter Rühren auf 110°C erwärmt. Bei dieser Temperatur wurde für eine weitere Stunde gerührt. Die anfänglich trübe Reaktionsmischung wird wenige Minuten nach Erreichen der Reaktionstemperatur klar. Man erhält ein gelbes, klares mehrfachquatemäres Organopolysiloxan mit einer Viskosität von 17400 mPas bei 25°C und einem Gehalt an quaternären und tertiären Stickstoffatomen von 0,607%. Die Strukturformel des erhaltenen, erfindungsgemäßen Organopolysiloxans ist in Figur 4 gezeigt bzw. veranschaulicht.

### Vergleichsbeispiel 1

Es wurde ein Aminosiliconöl nach EP-A-1 081 271, Muster C, charakterisiert durch eine Viskosität von 3100 mPas bei 25°C hergestellt.

### Vergleichsbeispiel 2

Analog dem in DE-A-37 19 086, Beispiel 3, beschriebenen Verfahren wurden 77,6 g (0,01 mol) des Epoxysiloxans aus Beispiel 2 mit 5,68 g (0,02 mol) Lauryl(dimethylaminopropyl)amid und 1,2 g (0,02 mol) Eisessig in 80 g Wasser und 200 ml Isopropanol umgesetzt. Es wurde ein stark gelb gefärbtes, leicht trübes Produkt einer Viskosität von 3800 mPas bei 25°C erhalten.

### Herstellung von Emulsionen

Eine Mischung aus 12 g eines Polyethersiloxans mit seitenständigen, ausschließlich Ethylenoxid enthaltenden, Polyetherketten, charakterisiert durch eine Viskosität von 950 mPas bei 25°C und einem Trübungspunkt einer 1%igen wäßrigen Lösung des Polyethersiloxans von 73°C, 7,3 g eines i-Tridecylethoxylats mit 5 EO und 0,5g deionisiertes Wasser wurden in einem 250 ml Becherglas mit einem Propellerrührer bei einer Geschwindigkeit von 250 U/min gerührt. Nacheinander werden nun 7,1 g Butyldiglycol, 11,4 g der Organopolysiloxane aus den Beispielen 3 und 4, bzw. den Vergleichsbeispielen zugegeben und 3 min gerührt. Nachfolgend werden in 10 g Schritten 61,7 g deionisiertes Wasser zugegeben und verrührt. Nach der letzten Zugabe wird für weitere 5 Minuten gerührt.

Emulsion E1 (erfindungsgemäß): enthält Organopolysiloxan aus Beispiel 3: Es wurde eine leicht gelbe, klare Mikroemulsion erhalten.

Emulsion E2 (erfindungsgemäß): enthält Organopolysiloxan aus Beispiel 4: Es wurde eine leicht gelbe, klare Mikroemulsion erhalten.

Vergleichsemulsion VE1 (nicht erfindungsgemäß): enthält Aminosiliconöl aus Vergleichbeispiel 1: Es wurde eine stark trübe Mikroemulsion erhalten.

Vergleichsemulsion VE2 (nicht erfindungsgemäß): enthält Aminosiliconöl aus Vergleichbeispiel 2: Es wurde eine leicht gelbe, klare Mikroemulsion erhalten.

Vergleichsemulsion VE3 (nicht erfindungsgemäß): enthält statt eines Organopolysiloxans die gleiche Menge Dilasoft KPL flüssig konz., eines auf einem Fettsäureamid beruhenden hydrophilen Weichmachers der Fa. Clariant AG.

Vergleichsemulsion VE4 (nicht erfindungsgemäß): enthält statt eines Organopolysiloxans die gleiche Menge Distearoylethylhydroxyethylmethylammonium-Methosulfat. Das Distearoylethylhydroxyethylmethylammonium-Methosulfat wurde in 100 g deionisiertem Wasser bei erhöhter Temperatur unter Rühren aufgelöst. Dabei wurde die Gesamtwassermenge auf 161,7 g erhöht.

### Ausrüstungsbeispiele

Es wurde ein gebleichter, unausgerüsteter Baumwollfrottee mit 380 g/m² mit der jeweiligen Flotte getränkt, die aus einer Verdünnung der jeweiligen Emulsion in entionisiertem Wasser bestand. Der getränkte Stoff wurde in einem Zweiwalzenfoulard auf 100% Flottenaufnahme abgequetscht. Die Menge waren so gewählt, daß 0,4% Aktivsubstanz aufgenommen wurden. Unter Aktivsubstanz wird die Gesamtmenge aus Polyethersiloxan und der jeweiligen Siloxane aus den Beispielen 3 und 4 bzw. den Vergleichsbeispiele 1 und 2 bzw. der organischen Weichmacher verstanden. Die Stoffmuster wurden 10 min bei 130°C getrocknet. Anschließend wurde ein Stoffstück von 80g Gewicht herausgeschnitten, an dem die folgenden Prüfungen durchgeführt wurden. Dieses Stoffstück wurde zur Vorbereitung auf die Untersuchungen für 14 Stunden bei einer Temperatur von 23°C und einer Luftfeuchtigkeit von 50% gelagert.

### Bestimmung der Waschfestigkeit

Nach der ersten Beurteilung des Weichgriffs und der Wassereinsinkzeit wurden Frotteemuster jeweils zehn mal gewaschen. Die Wäsche erfolgte in einer Trommelwaschmaschine der Fa. AEG mit einem Waschprogramm für Buntwäsche bei 60°C. Als Waschmittel wurden 50g eines kompakten, handelsüblichen Waschpulvergranulats der Fa. Henkel ohne Zusatz von Weichspülem verwendet. An den Waschgang schloß sich ein Schleuderschritt bei 1200 U/min an. Die Muster wurden danach auf einer Wäscheleine luftgetrocknet und anschließend zur Akklimatisation 14 Stunden bei einer Temperatur von 23°C und einer Luftfeuchtigkeit von 50% gelagert. Der Weichgriff und die Wassereinsinkzeit wurden nach der Ausrüstung der Stoffmuster und nach der ersten, dritten, fünften, siebenten und zehnten Wäsche bestimmt.

### Bestimmung des Weichgriffs

10 Testpersonen beurteilten den Weichgriff des ausgerüsteten Frotteestoffs nach subjektivem Empfinden und vergaben in Abhängigkeit von der Anzahl n der zu prüfenden Muster 1 bis n Punkte nach dem Schulnotenprinzip, wobei 1 Punkt für das weichste und n Punkte für das Muster mit den schlechtesten Griffeigenschaften vergeben wurden. In der Tabelle sind die Durchschnittswerte der jeweils für die einzelnen Muster vergebenen Noten angegeben.

### Bestimmung der Wassereinsinkzeit

Die Bestimmung der Wassereinsinkzeit erfolgte immer vor der Beurteilung des Weichgriffs an unter Normbedingungen akklimatisierten Stoffmustern. Dazu wurde ein 50 µl großer Tropfen entionisiertes Wasser aus einer Höhe von 3 mm auf die Stoffoberfläche gegeben und mit Hilfe einer Stoppuhr die Zeit bestimmt bis der Wassertropfen vom Stoff aufgesaugt war. Die in der Tabelle angegebenen Wassereinsinkzeiten sind die Mittelwerte von fünf Einzelbestimmungen der Wassereinsinkzeit.

In Tabelle 1 und 2 sind die mit den Emulsionen VE1, VE2, VE3, VE4, E1 und E2 erzielten Ergebnisse der mit Foulardverfahren ausgerüsteten Frotteemuster zusammengefaßt.

**Tabelle 1. Wassereinsinkzeit in Sekunden**

| **Wäsche** | **VE1** | **VE2** | **VE3** | **VE4** | **E1** | **E2** |
|---|---|---|---|---|---|---|
| **0** | 11 s | 33 s | 65 s | 13 s | 22 s | 30 s |
| **1** | 0,5 s | 0 s | 0 s | 0 s | 0,5 s | 0,5 s |
| **3** | 0 s | 0 s | 0 s | 0 s | 0 s | 0 s |
| **5** | 0 s | 0 s | 0 s | 0 s | 0 s | 0 s |
| **7** | 0 s | 0 s | 0 s | 0 s | 0 s | 0 s |
| **10** | 0 s | 0 s | 0 s | 0 s | 0 s | 0 s |

**Tabelle 2. Bestimmung des durchschnittlichen Weichgriffs**

| **Wäsche** | **VE1** | **VE2** | **VE3** | **VE4** | **E1** | **E2** |
|---|---|---|---|---|---|---|
| **0** | 3,2 | 1,8 | 4,6 | 5,5 | 2,2 | 3,7 |
| **1** | 3,0 | 2,9 | 4,3 | 4,3 | 2,8 | 3,7 |
| **3** | 4,0 | 2,3 | 4,1 | 4,9 | 2,7 | 3,0 |
| **5** | 3,6 | 2,7 | 3,7 | 5,4 | 3,5 | 2,1 |
| **7** | 4,0 | 3,5 | 3,3 | 4,1 | 3,1 | 3,0 |
| **10** | 4,6 | 3,4 | 3,3 | 4,3 | 3,2 | 2,2 |

## Patentansprüche

1. Mehrfachquatemäre verzweigte Organopolysiloxane enthaltend Struktureinheiten
[R¹R₂SiO_{1/2}]ₐ, [R¹RSiO_{2/2}]_{b}, [R¹SiO_{3/2}]_{c}, [RSiO_{3/2}]_{d} und/oder [SiO_{4/2}]ₑ (I)
wobei
R gleich oder verschieden ist und einen einwertigen, gegebenenfalls halogenierten Kohlenwasserstoffrest mit 1 bis 18 Kohlenstoffatomen je Rest bedeutet,
R¹ gleich oder verschieden ist und ein Rest R, ein Rest M-E oder ein Rest -(M-A-M-D)ₘ M-E ist, wobei mindestens ein Rest R¹ in den Struktureinheiten [R¹RSiO_{2/2}]_{b} und/oder [R¹SiO_{3/2}]_{c} die Bedeutung -(M-A-M-D)ₘ M-E hat,
M ein zweiwertiger, geradkettiger, verzweigter oder cyclischer Kohlenwasserstoffrest mit mindestens 4 Kohlenstoffatomen ist, der eine oder mehrere Hydroxylgruppen aufweist, über eine Si-C Bindung an ein Siliciumatom gebunden ist und in der Kohlenstoffatomkette ein oder mehrere Sauerstoffatome aufweisen kann,
E gleiche oder verschiedene einwertige Reste ausgewählt aus den Gruppen 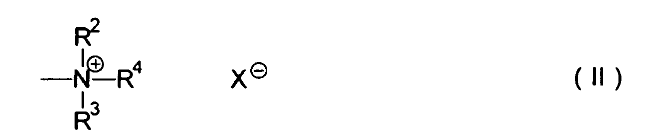 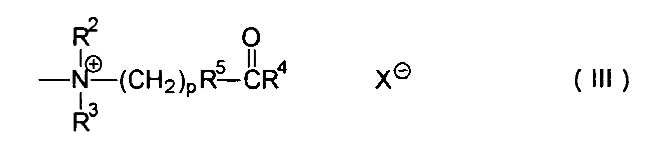 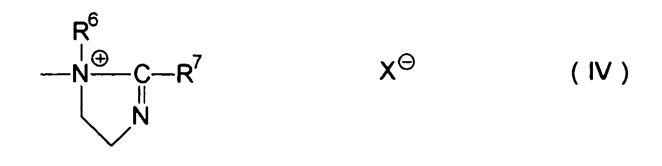 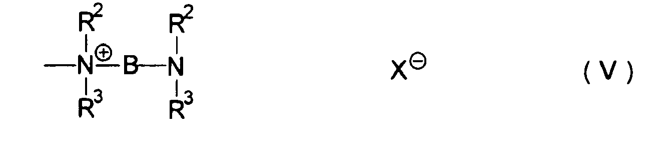 bedeutet,
A gleiche oder verschiedene zweiwertige Reste ausgewählt aus den Gruppen 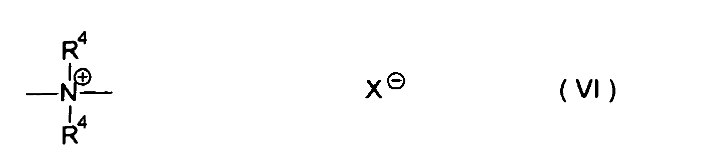 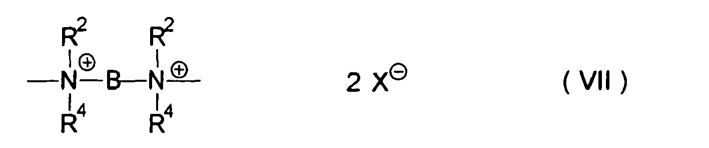 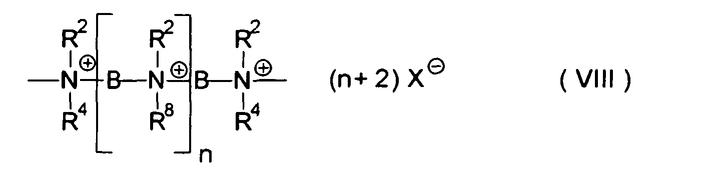 bedeutet,
D gleiche oder verschiedene zweiwertige Reste (IX) bedeutet, 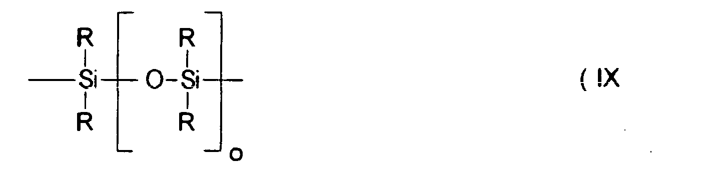
wobei R wie zuvor definiert ist, die Reste R² und R³ ein Wasserstoffatom oder gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können,
R⁴ ein einwertiger Alkylrest mit 1 bis 30 Kohlenstoffatomen oder ein Alkenylrest mit 2 bis 30 Kohlenstoffatomen ist, wobei sowohl die Alkyl- als auch die Alkenylreste Hydroxylgruppen aufweisen können, oder R⁴ Bestandteil eines verbrückenden Alkylenrestes ist,
R⁵ ein -O- oder -NR⁹-Rest ist, wobei R⁹ ein Alkyl- oder Hydroxyalkylrest mit 1 bis 4 Kohlenstoffatomen oder ein Wasserstoffatom ist,
R⁶ und R⁷ gleiche oder verschiedene einwertige Alkylreste mit 1 bis 30 Kohlenstoffatomen sind, wobei die Alkylreste Hydroxylgruppen aufweisen können,
R⁸ die Bedeutung des Restes R⁴ hat oder ein Rest M-D-M-E oder ein Rest M-D-(M-A-M-D)ₘ-M-E ist,
B ein zweiwertiger Kohlenwasserstoffrest mit mindestens 2 Kohlenstoffatomen ist, der eine oder mehrere Hydroxylgruppen aufweisen und in der Kohlenstoffkette ein oder mehrere Sauerstoff- oder Stickstoffatome aufweisen kann,
X⁻ ein organisches oder anorganisches Anion ist,
a eine Zahl von 0 bis 100,
b eine Zahl von 10 bis 1000,
c eine Zahl von 0 bis 100,
d eine Zahl von 0 bis 100,
e eine Zahl von 0 bis 10 ist,
mit der Maßgabe, dass die Summe a+b+c+d+e größer oder gleich 10 ist,
m eine Zahl von 1 bis 1000,
n eine Zahl von 1 bis 10,
o eine Zahl von 1 bis 250, und
p eine Zahl von 2 bis 8 ist.

2. Mehrfachquatemäre Organopolysiloxane nach Anspruch 1, **dadurch gekennzeichnet, daß** die Reste R² und R³ gleiche oder verschiedene, einwertige Alkylreste mit 1 bis 30 Kohlenstoffatomen, Alkenylreste mit 2 bis 30 Kohlenstoffatomen, Aryl-CH₂-Reste mit 7 bis 15 Kohlenstoffatomen sind oder jeweils Bestandteil eines verbrückenden Alkylenrestes sind, wobei sowohl die Alkyl- als auch die Alkenylreste Hydroxylgruppen aufweisen können und die Alkylreste von Sauerstoffatomen oder Schwefelatomen unterbrochen sein können, sind.

3. Mehrfachquatemäre Organopolysiloxane nach Anspruch 1 oder 2, **dadurch gekennzeichnet,**
**daß** der Rest R¹ in der Einheit [R¹R₂SiO_{1/2}]ₐ des mehrfachquaternären Organopolysiloxans der Formel (I) die Bedeutung des Restes R hat und
mindestens ein Rest R¹ in der Einheit [R¹RSiO_{2/2}]_{b} die Bedeutung -(M-A-M-D)ₘ-M-E hat,
a eine Zahl größer oder gleich 2, und
X⁻ ein physiologisch verträgliches organisches oder anorganisches Anion ist.

4. Mehrfachquatemäre Organopolysiloxane nach einem der Ansprüche 1 bis 3, **dadurch gekennzeichnet, daß**
M ein zweiwertiger, geradkettiger, verzweigter oder cyxlischer Kohlenwasserstoffrest mit mindestens 4 Kohlenstoffatomen ist, der eine Hydroxylgruppe aufweist, über eine Si-C Bindung an ein Siliciumatom gebunden ist und in der Kohlenstoffatomkette ein Sauerstoffatom aufweisen kann, wobei das mit der Hydroxylgruppe substituierte Kohlenstoffatom sich in unmittelbarer Nachbarstellung zu einem Kohlenstoffatom, das durch eine Einfachbindung an ein Stickstoffatom gebunden ist, befindet,
B ein zweiwertiger Kohlenwasserstoffrest der Formel -(CH₂)₂- oder -(CH₂)₃- ist,
der Rest R¹ in der Einheit [R¹R₂SiO_{1/2}]ₐ des mehrfachquaternären Organopolysiloxans der Formel (I) die Bedeutung des Restes R hat und
mindestens ein Rest R¹ in der Einheit [R¹RSiO_{2/2}]_{b} die Bedeutung -(M-A-M-D)ₘ-M-E hat,
a=2,
b = 10 bis 200,
c, d und e = 0,
m = 1 bis 50,
n = 1 bis 5,
o = 6 bis 120, und
p = 2 bis 6 ist.

5. Mehrfachquatemäre Organopolysiloxane nach Anspruch 1, 2, 3 oder 4, **dadurch**
**gekennzeichnet, daß**
M ein Kohlenwasserstoffrest der Formel 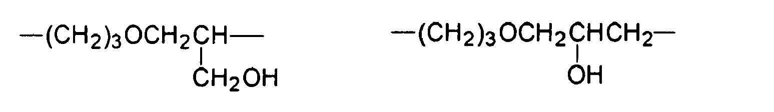 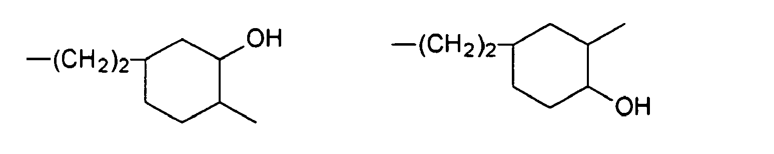 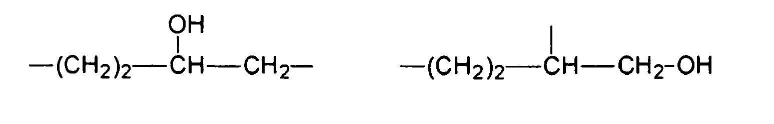 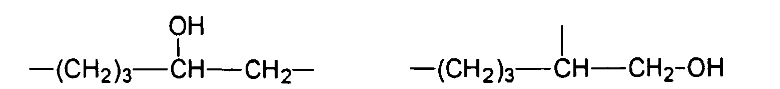 ist,
b = 10 bis 200,
m = 1 bis 20, und
o = 10 bis 100 ist und
mindestens ein Rest R¹ in der Einheit [R¹RSiO_{2/2}]_{b} die Bedeutung -(M-A-M-D)ₘ-M-E hat.

6. Verfahren zur Herstellung von mehrfachquaternären verzweigten Organopolysiloxanen nach einem der Ansprüche 1 bis 5, **dadurch gekennzeichnet, dass** in dafür geeigneten molaren Verhältnissen gleiche oder verschiedene Organopolysiloxane der allgemeinen Formel (X)
[YR₂SiO_{1/2}]ₐ, [YRSiO_{2/2}]_{b}, [YSiO_{3/2}]_{c}, [RSiO_{3/2}]_{d} und/oder [SiO_{4/2}]ₑ (X),
mit gleichen oder verschiedenen Organopolysiloxanen der allgemeinen Formel (XI)
YR₂SiO-[R₂SiO]₍₀₋₁₎-SiR₂Y (XI),
und mit gleichen oder verschiedenen Aminen der allgemeinen Formeln (XVI), (XVII), (XVIII) 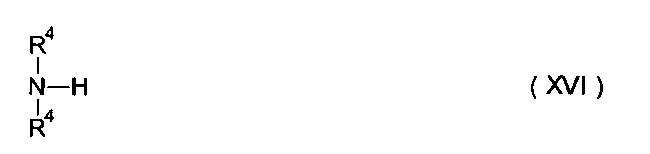 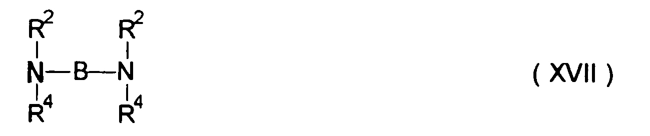 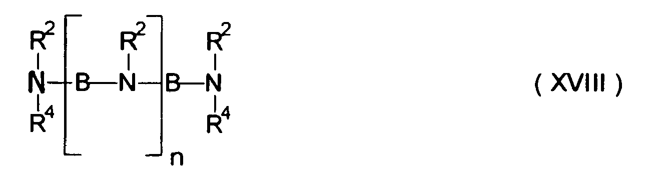 und gegebenenfalls mit mindestens einem der weiteren Amine der allgemeinen Formeln (XII), (XIII), (XIV), (XV) 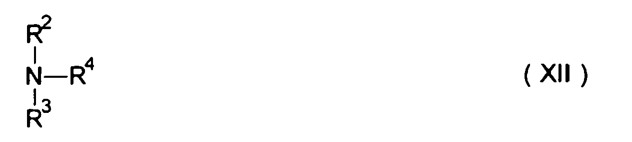 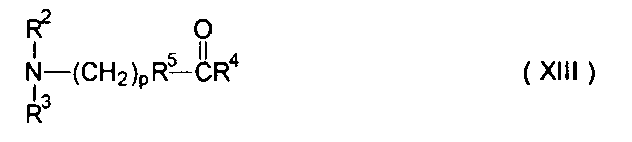 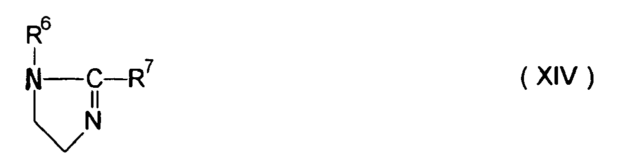 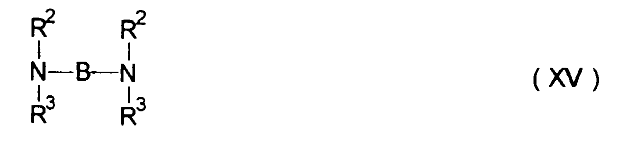 und mit gleichen oder verschiedenen Säuren der allgemeinen Formel HX diskontinuierlich oder kontinuierlich, gleichzeitig oder schrittweise, umgesetzt werden, wobei
R wie in Anspruch 1 definiert ist,
Y gleich oder verschieden ist und R oder einen einwertigen, SiC-gebundenen, geradkettigen oder verzweigten Kohlenwasserstoffrest mit mindestens 4 Kohlenstoffatomen bedeutet, der in der Kohlenstoffatomkette ein oder mehrere Sauerstoffatome aufweisen kann und eine oder mehrere Epoxygruppen enthält, mit der Maßgabe, dass mindestens ein Rest Y nicht R ist,
die Reste R², R³, R⁴, R⁵, R⁶ und R⁷ sowie B wie in Anspruch 1 definiert sind,
HX eine organische oder anorganische Säure ist,
a eine Zahl von 0 bis 100,
b eine Zahl von 10 bis 1000,
c eine Zahl von 0 bis 100,
d eine Zahl von 0 bis 100,
e eine Zahl von 0 bis 10 ist,
mit der Maßgabe, daß die Summe a+b+c+d+e größer oder gleich 10 ist,
o eine Zahl von 1 bis 250,
n eine Zahl von 1 bis 10, und
p eine Zahl von 2 bis 8 ist.

7. Verfahren zur Herstellung von mehrfachquaternären Organopolysiloxanen nach Anspruch 6, **dadurch gekennzeichnet, dass**
die Reste R² und R³ wie in Anspruch 2 definiert sind,
der Rest Y in der Einheit [YR₂SiO_{1/2}]ₐ der Organopolysiloxane der allgemeinen Formel (X) die Bedeutung des Restes R hat und
mindestens ein Rest Y in der Einheit [YRSiO_{2/2}]_{b} der Organopolysiloxane der allgemeinen Formel (X) nicht die Bedeutung R hat,
a = 2,
b = 10 bis 200,
c, d und e = 0,
n = 1 bis 5,
o = 6 bis 120, und
p = 2 bis 6 ist
und
m eine Zahl von 1 bis 50 ist.

8. Mehrfachquatemäre Organopolysiloxane, herstellbar nach dem Verfahren gemäß den Ansprüchen 6 oder 7.

9. Zubereitungen enthaltend mindestens ein mehrfachquatemäres Organopolysiloxan gemäß einem der Ansprüche 1 bis 5 oder 8 oder hergestellt gemäß einem der Ansprüche 6 oder 7.

10. Verwendung von Zubereitungen gemäß Anspruch 9 zur Weichgriffausrüstung von Textilien, als Prozeßhilfsmittel zur Herstellung oder zur Beschichtung von natürlichen oder synthetischen Fasern, in Wasch- und Reinigungsmitteln, in Polituren und Pflegemitteln zur Behandlung harter Oberflächen, zur Beschichtung und Trocknung von Lackoberflächen von Automobilen, als Korrosionsinhibitoren und zur Haut- und Haarpflege.

## Claims

1. Polyquaternised branched organopolysiloxanes comprising structural units
[R¹R₂SiO_{1/2}]ₐ, [R¹RSiO_{2/2}]_{b}, [R¹SiO_{3/2}]_{c}, [RSiO_{3/2}]_{d} undloder [SiO_{4/2}]ₑ (I)
wherein
R is the same or different and means optionally halogenated hydrocarbon groups containing 1 to 18 carbon atoms in each group,
R¹ is the same or different and is an R group, an M-E group or a -(M-A-M-D)ₘ-M-E group, wherein at least one group R¹ in the structural units [R¹RSiO_{2/2}]_{b} and/or [R¹SiO_{3/2}]_{c} has the meaning -(M-A-M-D)ₘ-M-E, M is a divalent, straight chained, branched or cyclic hydrocarbon group containing at least 4 carbon atoms, which possesses one or a plurality of hydroxyl groups, is bonded through an Si-C bond to a silicon atom and can possess one or a plurality of oxygen atoms in the chain of carbon atoms,
E means the same or different monovalent groups selected from the groups 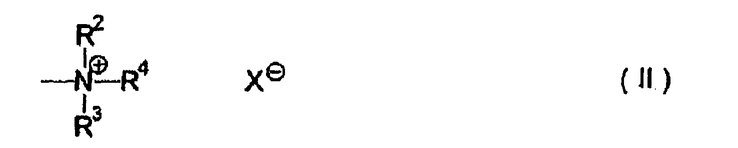 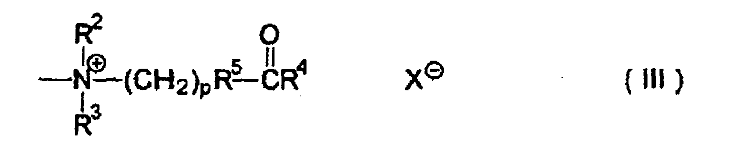 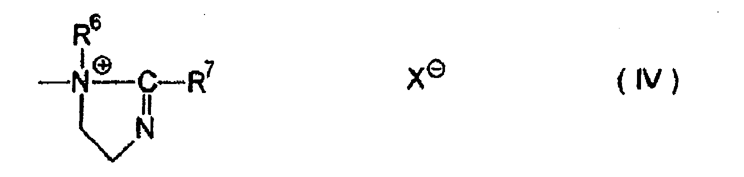 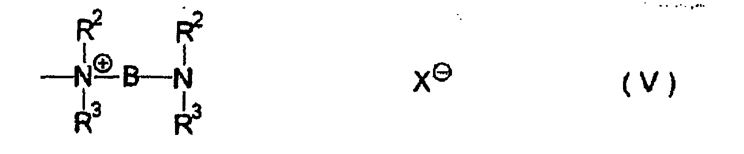
A means the same or different divalent groups selected from the groups 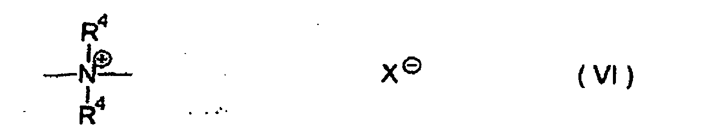 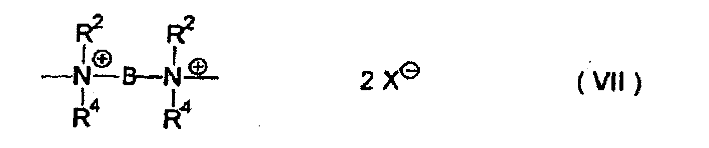 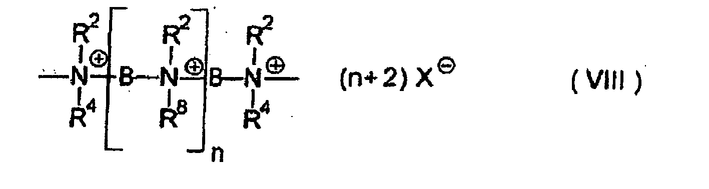
D means the same or different divalent groups (IX), 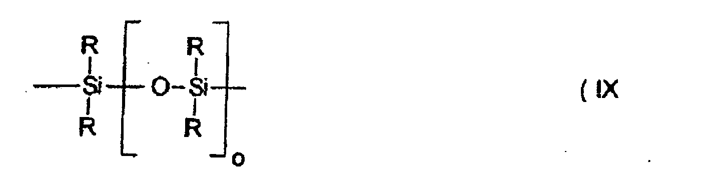
wherein R is as defined above, the groups R² and R³ are a hydrogen atom or the same or different monovalent alkyl groups containing 1 to 30 carbon atoms, alkenyl groups containing 2 to 30 carbon atoms, Aryl-CH₂ groups containing 7 to 15 carbon atoms or are each components of a bridging alkylene group, wherein both the alkyl and the alkenyl groups can also possess hydroxyl groups and the alkyl groups can be interrupted by oxygen atoms or sulfur atoms,
R⁴, is a monovalent alkyl group containing 1 to 30 carbon atoms or an alkenyl group containing 2 to 30 carbon atoms, wherein both the alkyl and the alkenyl groups can also possess hydroxyl groups,
R⁵ is an -O- or -NR⁹-Rest group, wherein R⁹ is an alkyl or hydroxyalkyl group containing 1 to 4 carbon atoms or is a hydrogen atom,
R⁶ and R⁷ are the same or different monovalent alkyl groups containing 1 to 30 carbon atoms, wherein the alkyl groups can possess hydroxyl groups, R⁸ has the same meaning as the R⁴ group or is an M-D-M-E group or an M-D-(M-A-M-D)ₘ-M-E group,
B is a divalent hydrocarbon group containing at least 2 carbon atoms, which can possess one or a plurality of hydroxyl groups and can possess one or a plurality of oxygen atoms or nitrogen atoms in the carbon chain,
X⁻ is an organic or inorganic anion,
a is a number from 0 to 100,
b is a number from 10 to 1000,
c is a number from 0 to 100,
d is a number from 0 to 100,
e is a number from 0 to 10,
with the proviso that the sum of a + b + c + d + e is greater than or equal to 10,
m is a number from 1 to 1000,
n is a number from 1 to 10,
o is a number from 1 to 250, and
p is a number from 2 to 8.

2. Polyquaternised organopolysiloxanes according to Claim 1, **characterised in that** the groups R² and R³ are the same or different monovalent alkyl groups containing 1 to 30 carbon atoms, alkenyl groups containing 2 to 30 carbon atoms, Aryl-CH₂ groups containing 7 to 15 carbon atoms or are each components of a bridging alkylene group, wherein both the alkyl and the alkenyl groups can also possess hydroxyl groups and the alkyl groups can be interrupted by oxygen atoms or sulfur atoms.

3. Polyquaternised organopolysiloxanes according to Claim 1 or 2,
**characterised in that**
the group R¹ in the [R¹R₂SiO_{1/2}]ₐ unit of the polyquaternised organopolysiloxane of Formula (I) assumes the meaning of the R group and
at least one R¹ group in the [R¹RSiO_{2/2}]_{b} unit has the meaning -(M-A-M-D)ₘ-M-E,
a is a number greater than or equal to 2, and
X- is a physiologically compatible organic or inorganic anion.

4. Polyquaternised organopolysiloxanes according to one of Claims 1 to 3, **characterised in that**
M is a divalent, straight chained, branched or cyclic hydrocarbon group containing at least 4 carbon atoms, which possesses a hydroxyl group, is bonded through an Si-C bond to a silicon atom and can possess an oxygen atom in the chain of carbon atoms, wherein the hydroxyl group-substituted carbon atom is located in the immediate vicinity of a carbon atom that is bonded through a single bond to a nitrogen atom,
B is a divalent hydrocarbon group of Formula -(CH₂)₂- or -(CH₂)₃-, the R¹ group in the [R¹R₂SiO_{1/2}]ₐ unit of the polyquaternised organopolysiloxane of Formula (I) assumes the meaning of the R group and
at least one R¹ group in the [R¹RSiO_{2/2}]_{b} unit has the meaning -(M-A-M-D)ₘ-M-E,
a = 2,
b = 10 to 200,
c, d and e = 0,
m = 1 to 50,
n = 1 to 5,
o = 6 to 120, and
p = 2 to 6.

5. Polyquaternised organopolysiloxanes according to Claims 1, 2, 3 or 4, **characterised in that** M is a hydrocarbon group of Formula 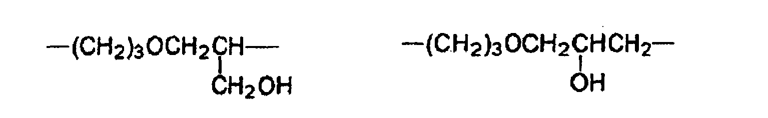 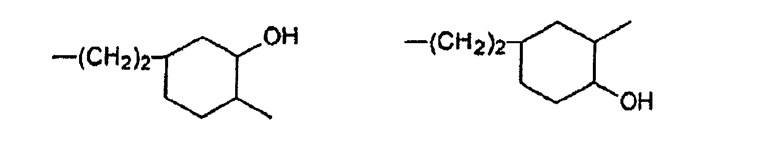 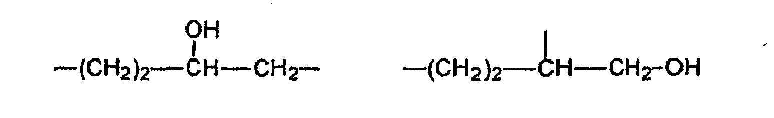 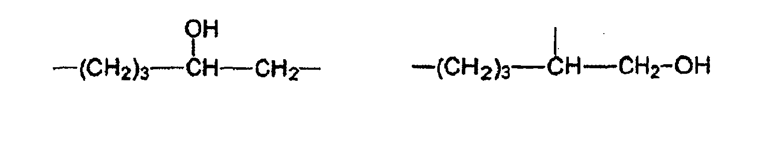 b = 10 to 200,
m = 1 to 20, and
o = 10 to 100 and
at least one R¹ group in the [R¹RSiO_{2/2}]_{b} unit has the meaning -(M-A-M-D)ₘ-M-E.

6. Process for manufacturing polyquaternised branched organopolysiloxanes according to one of Claims 1 to 5, **characterised in that** the same or different organopolysiloxanes of the general formula (X)
[YR₂SiO_{1/2}]ₐ, [YRSiO_{2/2}]_{b}, [YSiO_{3/2}]_{c}, [RSiO_{3/2}]_{d} undloder [SiO_{4/2}]ₑ, (X)
are reacted continuously, concurrently or batch wise in the corresponding molar quantities with the same or different organopolysiloxanes of the general Formula (XI)
YR₂SiO-[R₂SiO]₍ₒ₋₁₎-SiR₂Y, (Xl)
and with the same or different amines of the general Formulae (XVI), (XVII), (XVIII) 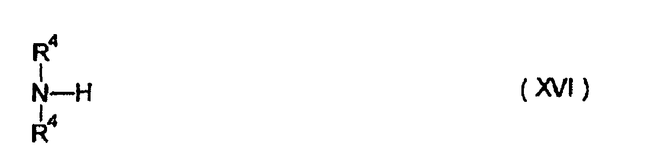 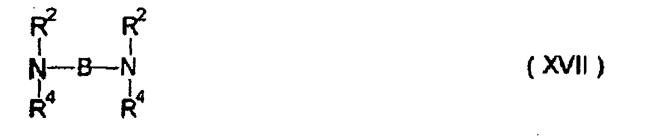 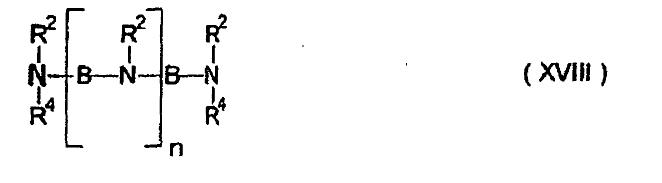 and optionally with at least one of the additional amines of the general Formulae (XII), (XIII), (XIV) (XV) 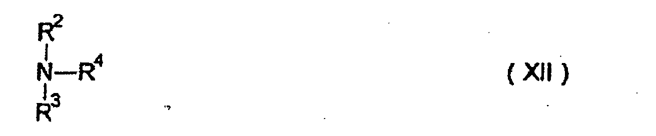 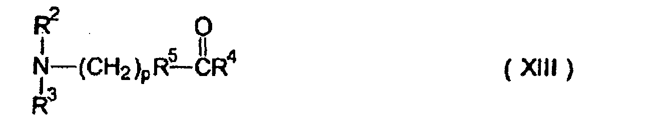 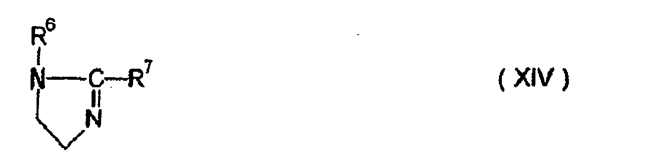 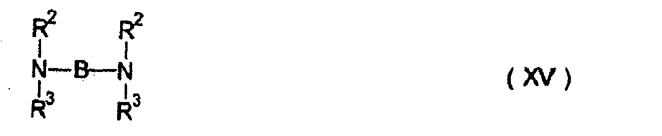 and with the same or different acids of the general Formula HX, wherein
R is as defined in Claim 1,
Y is the same or different and means R or a monovalent, SiC-bonded, straight chained or branched hydrocarbon group containing at least 4 carbon atoms, which can possess one or a plurality of oxygen atoms in the chain of carbon atoms and comprises one or a plurality of epoxide groups, with the proviso that at least one Y group is not R,
the groups R², R³, R⁴, R⁵, R⁶ and R⁷as well as B are as defined in Claim 1,
HX is an organic or inorganic acid,
a is a number from 0 to 100,
b is a number from 10 to 1000,
c is a number from 0 to 100,
d is a number from 0 to 100,
e is a number from 0 to 10,
with the proviso that the sum of a + b + c + d + e is greater than or equal to 10,
o is a number from 1 to 250,
n is a number from 1 to 10, and
p is a number from 2 to 8.

7. Process for manufacturing polyquaternised organopolysiloxanes according to Claim 6, **characterised in that**
the groups R² and R³ are as defined in Claim 2,
the Y group in the [YR₂SiO_{1/2}]ₐ unit of the organopolysiloxane of the general Formula (X) has the meaning of the group R and
at least one Y group in the [YRSiO_{2/2}]_{b} unit of the organopolysiloxane of the general Formula (X) does not have the meaning R,
a = 2,
b = 10 to 200,
c, d and e = 0,
n = 1 to 5,
o = 6 to 120, and
p = 2 to 6
and
m is a number from 1 to 50.

8. Polyquaternised organopolysiloxanes that can be manufactured according to the process according to Claims 6 or 7.

9. Preparation comprising at least one polyquaternised organopolysiloxanes according to one of Claims 1 to 5 or 8 manufactured according to one of Claims 6 or 7.

10. Use of a preparation according to Claim 9 for providing a soft touch to fabrics, as a process aid for the manufacture or for the coating of natural or synthetic fibres, in detergents and cleaning compositions, in polishes and conditioners for the treatment of hard surfaces, for coating and drying paint surfaces of automobiles, as corrosion inhibitors and for skin care and hair care.

## Revendications

1. Organopolysiloxanes polyquaternaires ramifiés renfermant les motifs structuraux
[R¹R₂SiO_{1/2}]ₐ, [R¹RSiO_{2/2}]_{b}, [R¹SiO_{3/2}]_{c}, [RSiO_{3/2}]_{d} et/ou [SiO_{4/2}]ₑ (I)
dans lesquels:
R est identique ou différent et représente un résidu d'hydrocarbure monovalent, éventuellement halogéné, possédant 1 à 18 atomes de carbone par résidu,
R¹ est identique ou différent et représente un résidu R, un résidu M-E ou un résidu -(M-A-M-D)ₘ-ME, au moins un résidu R¹ ayant la signification (M-A-M-D)ₘ-M-E dans les motifs structuraux [R¹RSiO_{2/2}]_{b} et/ou [R¹SiO_{3/2}]_{c},
M est un résidu d'hydrocarbure divalent, linéaire, ramifié ou cyclique, possédant au moins 4 atomes de carbone, qui comporte un ou plusieurs groupes hydroxyle, est lié à un atome de silicium par une liaison Si-C et peut présenter un ou plusieurs atomes d'oxygène dans la chaîne d'atomes de carbone,
E représente des résidus identiques ou différents choisis parmi les groupes: 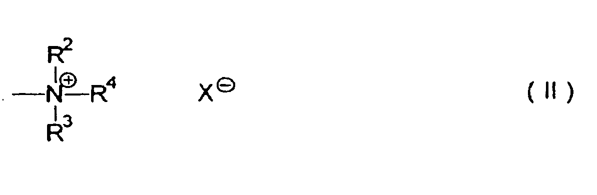 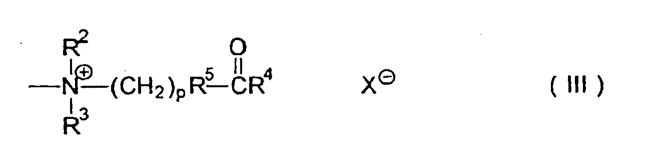 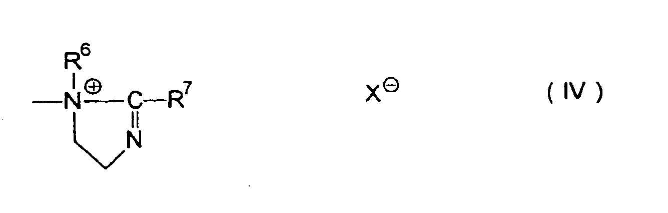 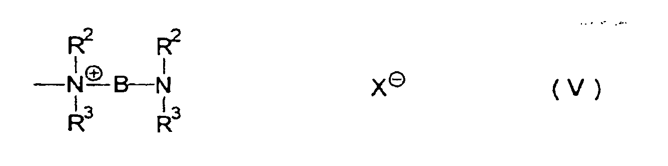
A représente des résidus divalents identiques ou différents choisis parmi les groupes : 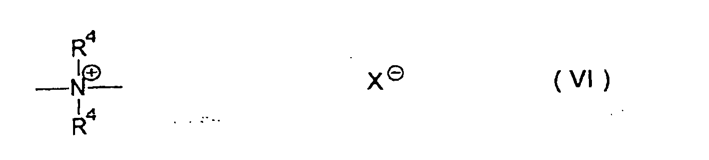 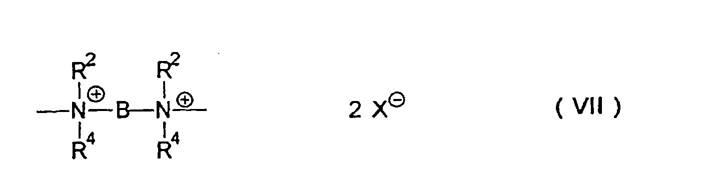 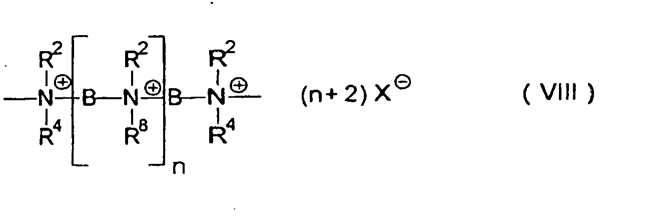
D représente des résidus divalents identiques ou différents (IX) 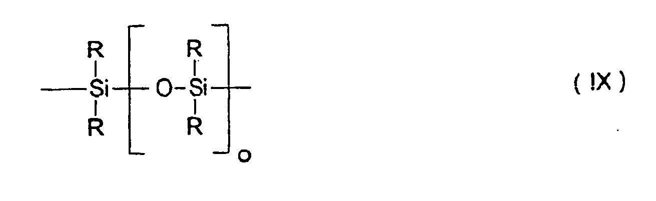
dans lesquels R est défini comme précédemment, les résidus R² et R³ représentent un atome de carbone ou des résidus alkyle monovalents identiques ou différents possédant 1 à 30 atomes de carbone, des résidus alkényle possédant 2 à 30 atomes de carbone, des résidus aryle-CH₂ possédant 7 à 15 atomes de carbone ou, à chaque fois, un constituant d'un résidu alkylène formant un pont, les résidus alkyle et alkényle pouvant chacun comporter des groupes hydroxyle et les résidus alkyle pouvant être interrompus par des atomes d'oxygène ou de soufre,
R⁴ est un résidu alkyle monovalent possédant 1 à 30 atomes de carbone ou un résidu alkényle possédant 2 à 30 atomes de carbone, les résidus alkyle et alkylène pouvant chacun comporter des groupes hydroxyle, ou R⁴ est un constituant d'un résidu alkylène formant un pont,
R⁵ est un résidu -O-ou -NR⁹-, R⁹ étant un résidu alkyle ou hydroxyalkyle possédant 1 à 4 atomes de carbone ou un atome d'hydrogène,
R⁶ et R⁷ sont des résidus alkyle monovalents identiques ou différents, possédant 1 à 30 atomes de carbone, les résidus alkyle pouvant comporter des groupes hydroxyles,
R⁸ a la signification du résidu R⁴, ou est un résidu M-D-M-E ou un résidu M-D-(M-A-M-D)ₘ-M-E,
B est un résidu de carbone divalent possédant au moins 2 atomes de carbone, comportant un ou plusieurs groupes hydroxyle et pouvant présenter un ou plusieurs atomes d'oxygène ou d'azote dans la chaîne de carbone,
X. est un anion organique ou anorganique,
a un nombre de 0 à 100,
b un nombre de 10 à 1000,
c un nombre de 0 à 100,
d un nombre de 0 à 100,
e un nombre de 0 à 10
à condition que le total a+b+c+d+e soit supérieur ou égal à 10,
m un nombre de 0 à 1000,
n un nombre de 1 à 10,
o un nombre de 1 à 250 et
p un nombre de 2 à 8.

2. Organopolysiloxanes polyquaternaires selon la revendication 1, **caractérisé en ce que** les résidus R² et R³ sont des résidus alkyle monovalents identiques ou différents, possédant 1 à 30 atomes de carbone, des résidus alkyle possédant 2 à 30 atomes de carbone, des résidus aryle-CH₂ possédant 7 à 15 atomes de carbone ou sont, à chaque fois, un constituant d'un résidu alkylène formant un pont, les résidus alkyle et alkylène pouvant chacun comporter des groupes hydroxyle et les résidus alkyle pouvant être interrompus par des atomes d'oxygène ou de soufre.

3. Organopolysiloxanes polyquaternaires selon la revendication 1 ou 2, **caractérisé en ce que** le résidu R¹ a la signification du résidu R dans le motif [R¹R₂SiO_{1/2}]ₐ de l'organopolysiloxane polyquaternaire de formule (I) et au moins un résidu R¹ du motif [R¹RSiO_{2/2}]_{b} signifie-(M-A-M-D)ₘM-E,
a est un nombre supérieur ou égal à 2 et
X- est un anion organique ou anorganique physiologiquement acceptable.

4. Organopolysiloxanes polyquaternaires selon l'une des revendications 1 à 3, **caractérisé en ce que**
M est un résidu d'hydro carbone divalent, linéaire, ramifié ou cyclique, possédant au moins 4 atomes de carbone, comportant un groupe hydroxyle, lié à un atome de silicium par une liaison Si-C et pouvant présenter un atome d'oxygène dans la chaîne de carbone, l'atome de carbone substitué par le groupe hydroxyle se trouvant en position avoisinant immédiatement un atome de carbone lié à un atome d'azote par une liaison simple,
B est un résidu de carbone divalent de formule - (CH₂)₂- ou -(CH₂)₃-,
le résidu R¹ a la signification du résidu R dans le motif [R¹R₂SiO_{1/2}]ₐ de l'organopolysiloxane polyquaternaire de formule (I) et
au moins un résidu R¹ a la signification -(M-A-M-D)ₘ-M-E dans le motif [R¹RSiO_{2/2}]_{b},
a = 2,
b = 10 à 200,
c, d et e = 0,
m = 1 à 50
n = 1 à 5,
o = 6 à 120 et
p = 2 à 6.

5. Organopolysiloxanes polyquaternaires selon la revendication 1, 2, 3 ou 4, **caractérisé en ce que** M est un résidu d'hydrocarbure de formule: 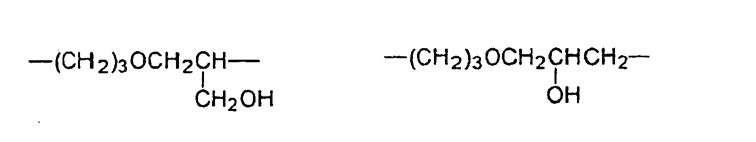 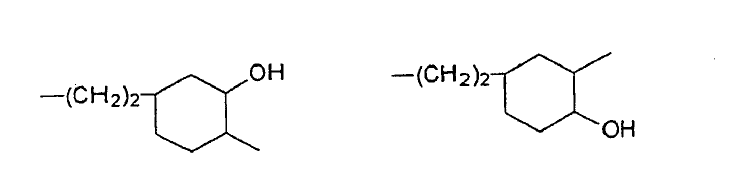 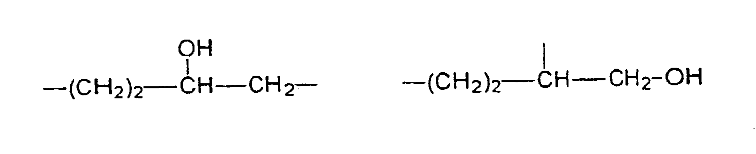 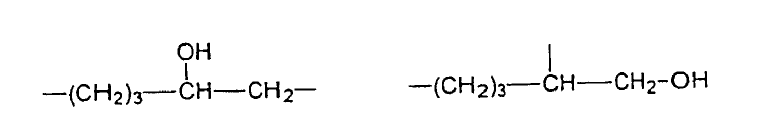 b = 10 à 200,
m = 1 à 20 et
o = 10 à 100 et
au moins un résidu R¹ a la signification -(M-A-M-D)ₘ M-E dans le motif [R¹RSiO_{2/2}]_{b}.

6. Procédé pour la fabrication d'organopolysiloxanes polyquaternaires ramifiés selon l'une des revendications 1 à 5, **caractérisé en ce que** dans des rapports molaires appropriés, des organopolysiloxanes identiques ou différents de formule générale (X)
[YR₂SiO_{1/2}]ₐ, [YRSiO_{2/2}]_{b}, [YSiO_{3/2}]_{c} [RSiO_{3/2}]_{d} et/ou [SiO_{4/2}]ₑ (X)
sont transformés en continu, ou en discontinu, simultanément ou progressivement avec des organopolysiloxanes identiques ou différents de formule générale (XI)
[YR₂SiO]-[R₂SiO]₍₀₋₁₎-SiR₂Y (XI)
et avec des amines identiques ou différentes de formules générales (XVI), (XVII), (XVIII) 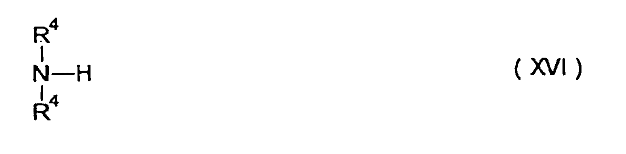 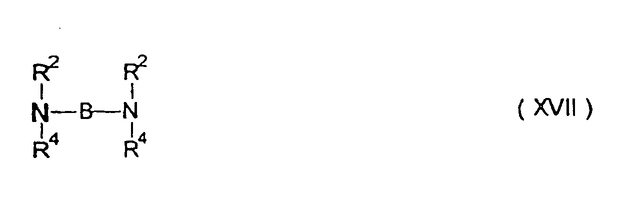 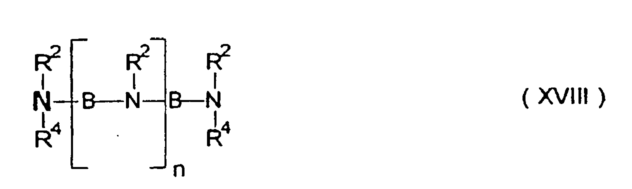 et, éventuellement, avec au moins une des autres amines de formules générales (XII), (XIII), (XIV), (XV). 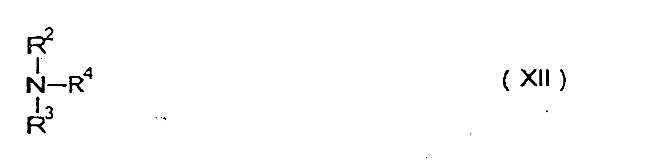 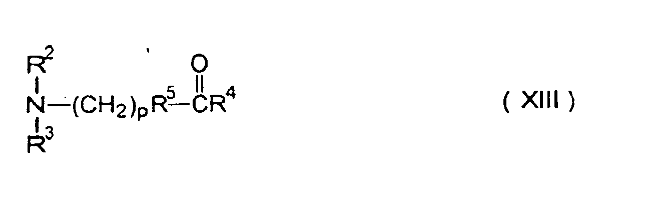 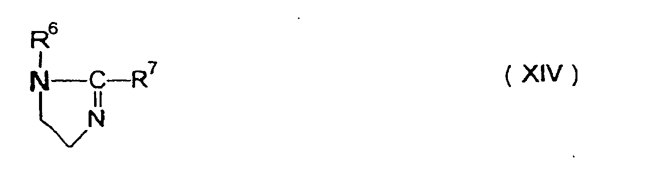 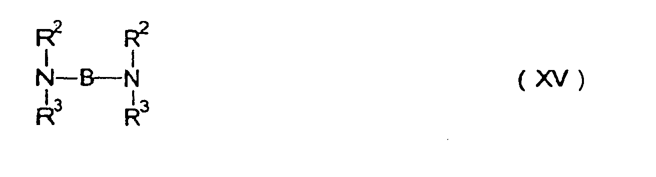 avec des acides identiques ou différents de formule générale HX,
dans lesquelles
R est défini comme dans la revendication 1,
Y est identique ou différent et R représente un résidu d'hydrocarbure monovalent, lié à SiC, linéaire ou ramifié, possédant au moins 4 atomes de carbone, pouvant comporter un ou plusieurs atomes d'oxygène dans la chaîne de carbone et renfermant un ou plusieurs groupes epoxy, à condition qu'au moins un résidu Y ne soit pas R,
les résidus R², R³, R⁴, R⁵, R⁶ et R⁷ et B sont tels que définis dans la revendication 1,
HX est un acide organique ou anorganique,
a est un nombre de 0 à 100,
b est un nombre de 10 à 1000,
c est un nombre de 0 à 100,
d est un nombre de 0 à 100,
e est un nombre de 0 à 10,
à condition que le total a+ b+ c+ d+ e soit supérieur ou égal à 10,
o est un nombre de 1 à 250
n est un nombre de 1 à 10 et
p est un nombre de 2 à 8.

7. Procédé pour la fabrication d'organsopolysiloxanes polyquaternaires selon la revendication 6, **caractérisé en ce que**
les résidus R² et R³ sont définis comme dans la revendication 2,
le résidu Y a la signification du résidu R dans le motif [YR₂SiO_{1/2}]ₐ des organopolysiloxanes de formule générale (X) et au moins un résidu Y n'a pas la signification R dans le motif [YRSiO_{2/2}]_{b} des organopolysiloxanes de formule générale (X),
a = 2,
b = 10 à 200,
c, d et e = 0,
n = 1 à 5,
o = 6 à 120 et
m est un nombre compris entre 1 et 50.

8. Organopolysiloxanes polyquaternaires, susceptibles d'être obtenus selon le procédé selon les revendications 6 ou 7.

9. Préparations contenant au moins un organopolysiloxane polyquaternaire selon l'une des revendications 1 à 5 ou 8, ou fabriqué selon l'une des revendications 6 ou 7.

10. Utilisation de préparations selon la revendication 9 à titre d'adoucissants du toucher de textiles, en tant que produits auxiliaires pour la fabrication ou l'enduction de fibres naturelles ou synthétiques, dans les produits de lavage et de nettoyage, dans les vernis et produits d'entretien pour le traitement des surfaces dures, pour l'enduction et le séchage des surfaces vernies des automobiles, en tant qu'inhibiteurs de corrosion et pour les soins cutanés et capillaires.
